# EUROPEAN PATENT SPECIFICATION

(11) **EP 4 013 155 B1**
(45) Date of publication and mention of the grant of the patent: **09.07.2025**
(21) Application number: 20852790.3
(22) Date of filing: 04.08.2020
(51) Int. Cl.: H04W 36/00, H04W 36/24, H04W 72/1268, H04W 72/23, H04W 74/0833, H04W 76/38, H04W 92/20, H04L 5/00

(54) **UPLINK RESOURCE CONFIGURATION METHOD, NETWORK SIDE DEVICE, AND USER EQUIPMENT**
UPLINK-RESSOURCENKONFIGURATIONSVERFAHREN, NETZWERKSEITIGE VORRICHTUNG UND BENUTZERGERÄT
PROCÉDÉ DE CONFIGURATON DE RESSOURCES DE LIAISON MONTANTE, DISPOSITIF CÔTÉ RÉSEAU ET ÉQUIPEMENT UTILISATEUR

(30) Priority: 09.08.2019 CN 201910736211
(43) Date of publication of application: 15.06.2022
(73) Proprietor: Datang Mobile Communications Equipment Co., Ltd., Beijing 100085 (CN)
(72) Inventor: XU, Meng, Beijing 100083 (CN); MIAO, Deshan, Beijing 100083 (CN); LIANG, Jing, Beijing 100083 (CN); MIAO, Jinhua, Beijing 100083 (CN)
(74) Representative: Maiwald GmbH
(86) International application number: PCT/CN2020/106780
(87) International publication number: WO 2021/027626

(56) References cited:
- WO-A1-2018/067063
- CN-A- 101 998 553
- CN-A- 103 716 883
- US-A1- 2018 338 271
- ANONYMOUS: "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 15)", 3GPP STANDARD; TECHNICAL SPECIFICATION; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.6.0, 29 June 2019 (2019-06-29), pages 1 - 365, XP051754468
- "3rd Generation Partnership Project; Technical Specification Group Radio Access Network; Evolved Universal Terrestrial Radio Access (E-UTRA); Radio Resource Control (RRC); Protocol specification (Release 15)", 29 June 2019 (2019-06-29), XP051754778, Retrieved from the Internet <URL:http://www.3gpp.org/ftp/3guInternal/3GPP_ultimate_versions_to_be_transposed/sentToDpc/36331-f60.zip> [retrieved on 20190629]
- ERICSSON: "Transmission in preconfigured uplink resources", 3GPP DRAFT; R2-1814342, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 12 October 2018 (2018-10-12), Mobile Competence Centre ; 650, route des Lucioles ; F-06921 Sophia-Antipolis Cedex ; France, pages 1 - 9, XP051523785

## Description

### TECHNICAL FIELD

The present disclosure relates to the field of communication technologies, and in particular to an uplink resource configuration method, a network device and a user equipment.

### BACKGROUND

In a handover procedure in the related art, a target cell generates a handover command for a user equipment (UE) and then the handover command is transmitted to the UE through a source cell. The handover command includes configuration information of radio resources configured by the target cell for the UE, UE ID cell radio network temporary identifier (UE ID C-RNTI) allocated to the UE, and a timer T304 for controlling handover, and may further include dedicated random access resource allocated by the target cell to the UE. After the UE receives the handover command, the timer T304 starts, the UE is configured according to the handover command, the UE synchronizes to the target cell, a radio resource control (RRC) layer submits a handover complete message to a bottom layer for sending to the target cell, and a medium access control (MAC) layer triggers a random access procedure. In case that the handover command carries dedicated random access information, a non-contention based random access procedure is triggered; otherwise, a contention based random access procedure is triggered. After the contention is resolved, the handover is completed, the timer T304 is stopped, and the MAC layer sends the handover complete message to the target cell.

In the LTE system, a Random Access Channel less (RACH-less) handover is introduced to shorten handover delay. The RACH-less scheme means that the UE does not need to trigger a random access procedure to access the target cell. Different from the handover procedures in the related art, the target cell configures indication information for performing RACH-less, and corresponding TA information in the handover command; and the handover command may further include pre-configured periodic uplink resources for the UE to send uplink messages.

However, in the related art, not all cells may be configured with RACH-less, the target cell can configure RACH-skip for the UE, only when TA of the target cell is 0ms, or, the TA of the target cell is the same as TA of a current serving primary cell or the TA of the target cell is the same as TA of a certain TA group of the current serving cell. Further, in case that the target cell configures a pre-configured uplink resource for the UE, the uplink resource is a periodic uplink resource; if the UE accesses late, it will cause a waste of resources. Moreover, for a non-terrestrial network (NTN) system, a cell coverage is relatively large and the number of UEs is relatively large; in case that the target cell reserves periodic uplink resources for each UE, it may cause high waste of resources. WO2018/067063A1 discloses a method for handover of a wireless device from a source cell served by a source base station to a target cell served by a target base station. 3GPP TS 36.300 v15.6.0 discusses handover procedure of a user equipment. 3GPP TS 36.331 v15.6.0 discusses reception of an RRCConnectionReconfiguration including the mobilityControlInfo by the UE (handover).

### SUMMARY

The invention is set out in the appended set of claims Embodiments of the present disclosure provide an uplink resource configuration method, a network device and a user equipment, which can solve the problem of resource waste caused by reserving periodic uplink resources for the UE.

### BRIEF DESCRIPTION OF THE DRAWINGS

FIG. 1 is a flow chart showing handover in the related art;
FIG. 2 is a flow chart showing RACH-less handover in the related art;
FIG. 3 is a flowchart of an uplink resource configuration method according to a first embodiment of the present disclosure;
FIG. 4 is a flowchart of an uplink resource configuration method according to a second embodiment of the present disclosure;
FIG. 5 is a schematic diagram of modules of a network device according to a third embodiment of the present disclosure;
FIG. 6 is a schematic diagram of modules of a user equipment according to a fourth embodiment of the present disclosure;
FIG. 7 is a structural block diagram of a network device according to an example of the present disclosure; and
FIG. 8 is a structural block diagram of a user equipment according to an example of the present disclosure.

### DETAILED DESCRIPTION

In order to make the technical problems, the technical solutions and the advantages of the present disclosure more apparent, the present disclosure will be described hereinafter in conjunction with the drawings and embodiments. In the following descriptions, to facilitate understanding embodiments of the present disclosure, specific configurations and specific details of components are provided. Thus, persons having ordinary skill in the art should understand that, various changes and modifications may be made to the embodiments described here, without departing from scope of the present disclosure. In addition, for clarity and simplicity, descriptions about known functions and constructions are omitted.

It should be understood that, the phrase "one embodiment" or "an embodiment" as used throughout the specification means that a particular feature, structure, or characteristic relating to an embodiment is included in at least one embodiment of the present disclosure. Thus, "in one embodiment" or "in an embodiment" as used throughout the specification does not necessarily refer to the same embodiment. In addition, these specific features, structures, or characteristics may be combined in any suitable manner in one or more embodiments.

In various embodiments of the present disclosure, it should be understood that, the sequence numbers of the following processes do not imply the order of execution. The order of execution of each process should be determined by its function and internal logic, which should not constitute any limitation to the implementation processes of the embodiments of the application.

In addition, the terms "system" and "network" are often used interchangeably herein.

In the embodiments of the present disclosure, it should be understood that "B corresponding to A" means that B is associated with A, and B may be determined based on A. However, it should also be understood that determining B based on A does not mean that B is only determined based on A, and B may also be determined based on A and/or other information.

In the embodiments of the present disclosure, forms of access network are not limited, and may include access network of a macro base station, a pico base station, a node B (the name of the 3G mobile base station), an enhanced node B (eNB), a gNB (the name of the 5G mobile base station), a femto eNB or a home eNode B or a Home eNB or an HeNB, a relay station, an access point (AP), a remote radio unit (RRU), a remote radio head (RRH). A user equipment may be a mobile phone (or cellphone), or another device which is capable of transmitting and receiving a wireless signal, including a UE, a personal digital assistant (PDA), a wireless modem, a wireless communication device, a handheld device, a laptop, a cordless phone, a wireless local loop (WLL) station, a customer premise equipment which is capable of converting a mobile signal into a WiFi signal, or a mobile smart hotspot, a smart appliance, or another device which may spontaneously communicate with a mobile communication network without a human operation, and so on.

In the description of the embodiments of the present disclosure, the related art is first described as follows.

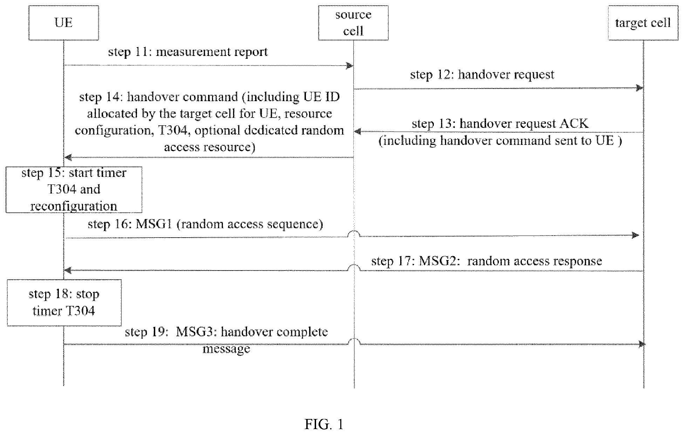

In a first aspect, as shown in FIG. 1, a handover procedure in the related art includes the following steps.

Step 11: reporting, by a UE, a measurement report to a source cell.

Step 12: making, by the source cell, a handover decision based on the measurement report, and sending a handover request message to a target cell.

Step 13: making, by the target cell, an admission decision; in case that the target cell allows the UE to switch to the target cell, allocating a new UE ID, i.e., a new C-RNTI, and radio resources for the UE; further allocating dedicated random access resources for the UE; generating, by the target cell, a handover command for the UE, and sending a handover request response message carrying the handover command to the source cell.

Step 14: after the source cell receives the handover request response message sent by the target cell, transparently transmitting the handover command contained therein to the UE.

Step 15: after the UE receives the handover command, starting a timer T304, and configuring the UE according to the handover command, synchronizing to the target cell, and triggering a random access procedure.

Step 16: in case that the handover command includes dedicated handover resources, transmitting a dedicated random access sequence; otherwise, triggering a contention based random access procedure, and selecting and transmitting a random sequence to the target cell.

Step 17: receiving, by the UE, a random access response message in a random access response window, where the random access response message includes TA information and uplink grant configuration information.

Step 18: stopping, by the UE, the timer T304, and adjusting uplink transmission time according to the TA contained in the message 2.

Step 19: transmitting a handover complete message to the target cell according to the uplink resources allocated for the UE, thereby completing an air interface handover procedure.

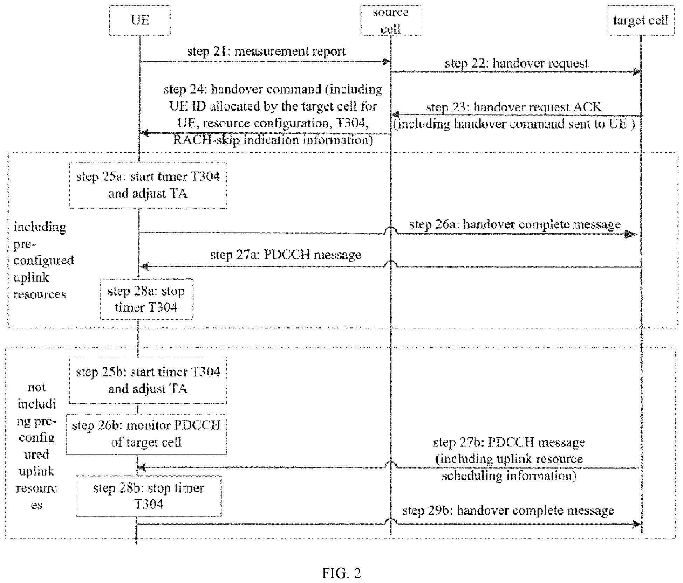

**In** a second aspect, as shown in FIG. 2, a RACH-less handover procedure includes the following steps.

Step 21: reporting, by a UE, a measurement report to a source cell.

Step 22: making, by the source cell, a handover decision based on the measurement report, and sending a handover request message to a target cell.

Step 23: making, by the target cell, an admission decision; in case that the target cell allows the UE to switch to the target cell, allocating a new UE ID, i.e., a new C-RNTI, and radio resources for the UE; in case that the target cell decides to configure RACH-less for the UE, configuring RACH-skip configuration information in a handover command, where the RACH-skip configuration information includes TA information (which can indicate 0ms, or indicate synchronization with a TA group in the serving cell), and optionally includes uplink pre-configuration information (which includes a first sub-frame of an uplink grant, period and configuration information of uplink grant); generating, by the target cell, a handover command for the UE, and sending a handover request response message carrying the handover command to the source cell.

Step 24: after the source cell receives the handover request response message sent by the target cell, transparently transmitting the handover command contained therein to the UE.

When configuring pre-configuration uplink resources for the UE, steps 25a to 26a are performed after the step 24.

Step 25a: after the UE receives the handover command, starting a timer T304, configuring the UE according to the handover command, synchronizing to the target cell, and adjusting uplink timing according to the configured TA information carried in the handover command, that is, transmitting an uplink message according to an uplink time of a designated TA group in a serving cell.

Step 26a: in case that the handover command includes the uplink pre-configuration information, transmitting a handover complete message to the target cell at a first valid PUSCH occasion, which is a first PUSCH resource location configured for the UE, encountered by the UE.

Step 27a: monitoring, by the UE, PDCCH message of the target cell.

Step 28a: when the UE receives the PDCCH message scrambled with the C-RNTI of the UE, stopping the timer T304, thereby completing the handover.

In case that the pre-configuration uplink resources are not configured for the UE, steps 25b to 27b are performed after the step 24.

Step 25b: after the UE receives the handover command, starting a timer T304, configuring the UE according to the handover command, synchronizing to the target cell, and adjusting uplink timing according to the configured TA information carried in the handover command, that is, transmitting an uplink message according to an uplink time of a designated TA group in a serving cell; in case that the handover command does not contain the uplink pre-configuration information, monitoring a physical downlink control channel (PDCCH) message of the target cell.

Step 26b: monitoring, by the UE, the PDCCH message of the target cell.

Step 27b: sending, by the target cell, a PDCCH message to the UE, where the PDCCH message may include uplink resource scheduling information.

Step 28b: when the UE monitors a PDCCH command of the target cell scrambled with the C-RNTI of the UE, stopping the timer T304.

Step 29b: sending, by the UE, a handover complete message according to uplink resources allocated by the PDCCH.

### First embodiment

One embodiment of the present disclosure provides an uplink resource configuration method, which is performed by a network device and solves the problem of resource waste caused by reserving periodic uplink resources for the UE.

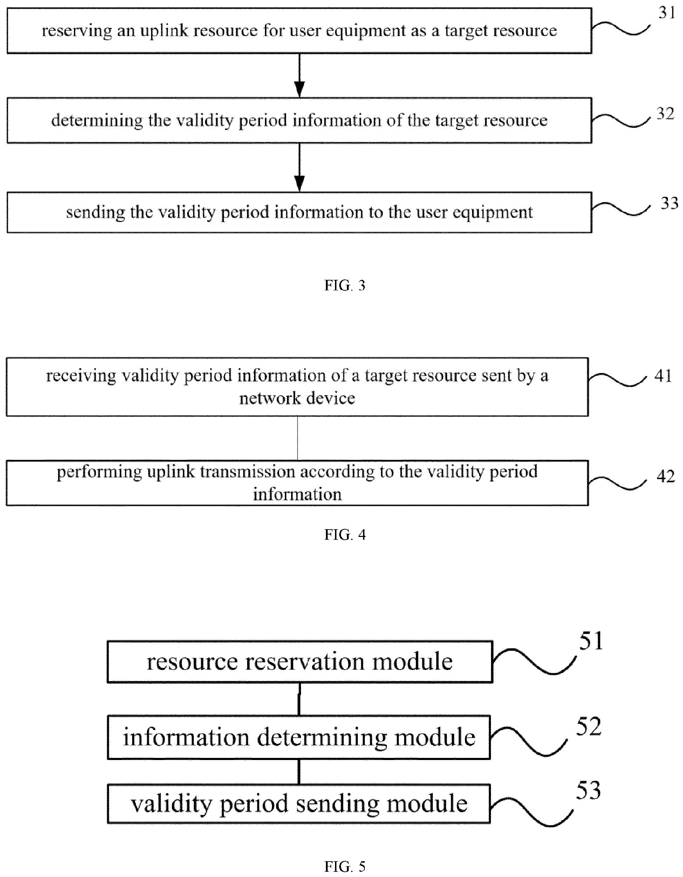

As shown in FIG. 3, an uplink resource configuration method according to one embodiment of the present disclosure specifically includes the following steps.

Step 31: reserving an uplink resource for user equipment as a target resource.

That is, the target resource is an uplink resource reserved for the user equipment. Validity period information is used to indicate a time window during which the user equipment can use the target resource.

Step 32: determining the validity period information of the target resource.

Step 33: sending the validity period information to the user equipment.

Optionally, the validity period information includes at least one of synchronization signal and PBCH block index (SSB index) associated with the target resource, a start time of a valid window, an end time of the valid window, a length of the valid window, a cycle of the target resource and configuration information of timing advance.

Optionally, the start time of the valid window is one of the following:
A1: system frame number (SFN) of a cell to be accessed by the user equipment;
A2: system frame number (SFN) of a cell to be accessed by the user equipment and an offset;
A3: after the user equipment receives a signaling carrying the validity period information, a first specified slot position or sub-frame position of a cell to be accessed by the user equipment;
A4: a preset moment when a first timer expires, where the first timer is started when the user equipment receives the signaling carrying the validity period information or when the user equipment obtains downlink synchronization of the cell to be accessed;
A5: a system frame number of a predetermined reference cell;
A6: a system frame number of a predetermined reference cell and offset;
A7: after the user equipment receives a signaling carrying the validity period information, a first specified slot position or sub-frame position of a predetermined reference cell.

For the offset in the items A2 and A6, a granularity is sub-frame, slot or symbol, that is, the offset specifies the number of sub-frames, or the number of slots, or the number of symbols.

For the item A1, for example, in a handover scenario or a PSCell change scenario, after the UE receives a command, the UE obtains downlink synchronization by reading the SSB, and simultaneously obtains the SFN of the target cell, so that the pre-configured uplink resources start to be considered to be valid at the following moment: SFN specified by a target access cell.

For the item A2, for example, in a handover scenario or a PSCell change scenario, after the UE receives a command, the UE obtains downlink synchronization by reading the SSB, and simultaneously obtains the SFN of the target cell, so that the pre-configured uplink resources start to be considered to be valid at the following moment:
SFN and sub-frames specified by a target access cell, that is, after reaching the specified SFN, the number of sub-frames specified by the offset; or,
SFN and slots specified by a target access cell, that is, after reaching the specified SFN, the number of slots specified by the offset; or,
SFN and symbols specified by a target access cell, that is, after reaching the specified SFN, the number of symbols specified by the offset.

For the predetermined reference cell in the items A5 and A6, the predetermined reference cell may be configured by the network device through signaling, or may be specified by the protocol. That is, the network device may configure cell identification information of the reference cell or identification information of a reference cell group to the user equipment, so that the user equipment knows which cell is used as a reference, or the reference cell determined by the protocol; for example, in the handover scenario, a source primary cell is used as a reference cell; or in a PSCell change scenario, a source PSCell is used as a reference cell.

For the items A5 and A6, for example, in a handover scenario or a PSCell change scenario, taking a source PCell or a source PSCell as a timing reference, the UE knows SFN of the serving cell, and pre-configured uplink resources of the target cell start to be considered to be valid when reaching the following specified moment:
specified SFN; or,
specified SFN and specified sub-frame; or,
specified SFN and specified slot; or,
specified SFN and specified symbol.

Optionally, the end time of the valid window is one of the following:
B1: system frame number of a cell to be accessed by the user equipment;
B2: system frame number of a cell to be accessed by the user equipment and an offset;
B3: a preset moment when a second timer expires, where the second timer is started at the start time of the valid window, or a first valid uplink resource occasion in a target resource, or a moment when the user equipment receives the signaling carrying the validity period information; where the length of the valid window is duration of the second timer;
B4: system frame number of a predetermined reference cell;
B5: system frame number of a predetermined reference cell and offset;
B6: a moment when the number of repetitions of valid uplink resource occasions reaches a first preset number of times, where the length of the valid window is the first preset number of times of the uplink resource occasions;
B7: a moment when the number of repetitions of valid uplink resource cycles reaches a second preset number of times, where the length of the valid window is the second preset number of times of the valid uplink resource cycles;
B8: a timeout moment of a third timer for controlling cell handover or synchronization reconfiguration.

For the offset in the items B2 and B5, a granularity is sub-frame, slot or symbol.

For the item B1, it means that the UE considers that pre-configured uplink resources of the target cell (i.e., a cell to be accessed by the UE) become invalid after reaching the following moment: specified SFN.

For the item B2, it means that the UE considers that pre-configured uplink resources of the target cell (i.e., a cell to be accessed by the UE) become invalid after reaching the following moment:
specified SFN and specified sub-frames; or,
specified SFN and specified slots; or,
specified SFN and specified symbols.

For the item B3, it means that the UE starts the second timer at the start time of the valid window of the target resource; or, the UE starts the second timer at a first valid uplink resource occasion (for example, PUSCH occasion) in the target resource, i.e., a first valid uplink resource occasion such as PUSCH occasion in the valid window; after the timer expires, the UE considers that the target resource starts to be invalid; or, the UE starts the second timer at a moment when the user equipment receives the signaling carrying the validity period information, and, after the timer expires, the UE considers that the target resource is invalid. The second timer may be configured through signaling, for example, the network configures valid duration through system information or dedicated signaling, or the protocol specifies valid duration. The duration of the second timer is the length of the valid window.

For the item B4, for example, in a handover scenario or a PSCell change scenario, taking a source PCell or a source PSCell as a timing reference, the UE knows SFN of the serving cell, and pre-configured uplink resources of the target cell start to be considered to be invalid when reaching the following specified moment: specified SFN.

For the item B5, for example, in a handover scenario or a PSCell change scenario, taking a source PCell or a source PSCell as a timing reference, the UE knows SFN of the serving cell, and pre-configured uplink resources of the target cell start to be considered to be invalid when reaching the following specified moment:
specified SFN and specified sub-frame; or,
specified SFN and specified slot; or,
specified SFN and specified symbol.

For the item B6, it means that pre-configured uplink resources are considered to be invalid after the number of repetitions of uplink resource occasions such as physical uplink shared channel occasions (PUSCH occasions), starting from the start time of the valid window, reaches the specified number of times of the uplink resource occasions. In a multi-beam scenario, the uplink resource occasions may also include uplink resources for beam sweeping in a circle, that is, the uplink resource occasions may also include one uplink occasion such as PUSCH occasion on each configured beam. The duration of the second timer is the number of repetitions of valid uplink resource occasions, and the number of repetitions may be configured for the UE through signaling.

For the item B7, it means that the pre-configured uplink resources are considered to be invalid, after the number of repetitions of uplink resource cycles, starting from the start time of the valid window, reaches a specified number of repetition cycles. The cycle is a repetition cycle of uplink resources configured for the network. The duration of the second timer is the number of repetitions of the valid uplink resource cycles, and the number of repetitions may be configured for the UE through signaling.

The third timer in the item B8 is a timer that controls the UE to determine failure of handover or synchronization reconfiguration procedure, which may be specifically a timer T304 or a timer T307.

Optionally, the target resource includes a physical uplink control channel (PUCCH) resource and/or a physical uplink shared channel (PUSCH) resource.

That is, the target resource may include only PUCCH resource, may only include PUSCH resource, or may include PUCCH resource and PUSCH resource.

It should be noted that a length unit of the valid window may be described in a time unit. For example, the length of the valid window may be the duration of the foregoing second timer, for example, in milliseconds (ms), slot, SFN, or sub-frame as a unit of measurement. The length of the valid window may also be described by the number of times of a certain behavior. For example, the length of the valid window may be the number of repetitions of valid uplink resource occasions or the number of repetitions of uplink resource cycles, that is, the uplink resource occasion or uplink resource cycle is taken as a unit of measurement.

Optionally, the sending the validity period information to the user equipment, includes:
in a cell handover procedure, or in a cell synchronization reconfiguration procedure, or in a secondary cell group synchronization reconfiguration procedure, or in a secondary cell addition procedure, or in a secondary cell modification procedure, or in a procedure in which downlink data arrives and uplink is out of synchronization, sending the validity period information to the user equipment.

That is, the uplink resource configuration method of the embodiment of the present disclosure is applicable to the following scenarios:
a cell handover procedure, a cell synchronization reconfiguration procedure, a secondary cell group synchronization reconfiguration procedure, a secondary cell addition procedure, a secondary cell modification procedure, or a procedure in which downlink data arrives and uplink is out of synchronization.

Specifically, in a handover scenario, the target cell provides the validity period information, and the validity period information may be sent to the UE through an RRC message handover command, i.e., a synchronization reconfiguration message or an RRC reconfiguration message; or, the validity period information may be provided through MAC CE or a PDCCH message of the source cell.

In an SCG synchronization reconfiguration scenario (i.e., synchronization reconfiguration scenario such as PSCell change or within PSCell cell), the validity period information may be sent to the UE through an RRC message, i.e., an SCG synchronization reconfiguration message, or MAC CE or a PDCCH message of the source PCell or source PSCell cell.

In a secondary cell (SCell) addition or modification scenario, the validity period information may be provided by an RRC message of the serving cell PCell or PSCell. The RRC message may be one of an RRC reconfiguration message, an RRC recovery message, an RRC reestablishment cell, and an RRC establishment message. The validity period information may also be provided by MAC CE or a PDCCH message of the serving cell PCell or PSCell. The validity period information may also be provided by a PDCCH message of a serving cell SCell.

In a scenario in which downlink data arrives and uplink is out of synchronization (for example, a geographical position of UE remains unchanged during movement of a satellite, the satellite may obtain TA according to the geographical position of the UE and the current position of the satellite), a serving cell provides the validity period information, for example, through an RRC signaling, or MAC CE or PDCCH message.

Optionally, the configuration information of the timing advance includes:
timing advance; or,
a timing advance reference cell and a time difference with a timing advance of the reference cell.

In case that the network device configures a timing advance for the UE, after the UE obtains a timing advance of a cell to be accessed, the UE adjusts uplink transmission time according to the provided timing advance, and sends uplink data to the cell within configured available uplink resources.

In case that the network device configures a timing advance reference cell and a time difference with a timing advance of the reference cell for the UE, the UE calculates a TA of a cell to be accessed by the UE according to the TA of the reference cell combined with a time difference between the reference cell and the cell to be accessed by the UE, so as to adjust uplink transmission time, and then sends uplink data to the cell to be accessed by the UE within configured available uplink resources.

Optionally, the network device may calculate the TA based on the following information:
geographical location information of the UE;
geographic location relationship between a source cell or a designated serving cell and a target cell;
geographical location information of the target cell itself;
timing relationship between a source cell or a designated serving cell and the target cell.

Optionally, the network device also needs to provide specific configuration information of the target resource, and the configuration information may include at least one of the following:
repetition cycle;
SFN and/or a slot where an uplink resource is located in the cycle;
SFN and/or a sub-frame where the uplink resource is located in the cycle;
SFN and/or a symbol where the uplink resource is located in the cycle;
a starting position of the SFN and/or a starting position of the slot where the uplink resource is located in the cycle;
a starting position of the SFN and/or a starting position of the sub-frame where the uplink resource is located in the cycle;
a starting position of the SFN and/or a starting position of the symbol where the uplink resource is located in the cycle;
a specific valid slot and/or a valid symbol position within a valid time period;
a specific valid sub-frame position and/or a valid symbol position within the valid time period;
a starting time of the specific valid slot and/or a starting time of the valid symbol position within the valid time period;
a starting time of the specific valid sub-frame position and/or a starting time of the valid symbol position within the valid time period;
the number of consecutive valid symbols in the slot or sub-frame where the uplink resource is located;
the number of consecutive valid slots or sub-frames in the SFN where the uplink resource is located.

Considering that the NR system supports multi-beam scenarios, the configuration information of the uplink resources may further include an SSB index to associate related SSBs.

Optionally, the validity period information may be expressed in a form of a bitmap and/or a specific information element (IE) indication.

In summary, in the embodiments of the present disclosure, TA and the validity period information of uplink resources reserved for the UE can be provided for the UE. Compared with providing repeated reserved uplink resources, providing specific validity period information can save reserved uplink resources, and enables to skip the random access procedure and switch to the target cell on the premise of saving air interface resources of the cell to be accessed by the UE, and enables the UE to switch to the target cell by skipping the random access procedure on the target cell that is not synchronized with the serving cell.

### Second embodiment

One embodiment of the present disclosure further provides an uplink resource configuration method, which is performed by a user equipment (UE) and solves the problem of resource waste caused by reserving periodic uplink resources for the UE.

As shown in FIG. 4, an uplink resource configuration method according to one embodiment of the present disclosure specifically includes the following steps.

Step 41: receiving validity period information of a target resource sent by a network device.

The target resource is an uplink resource reserved for the user equipment. The validity period information is used to indicate a time window during which the user equipment can use the target resource.

Optionally, the validity period information includes at least one of synchronization signal and PBCH block index (SSB index) associated with the target resource, a start time of a valid window, an end time of the valid window, a length of the valid window, a cycle of the target resource and configuration information of timing advance.

Optionally, the start time of the valid window is one of the following:
A1: system frame number (SFN) of a cell to be accessed by the user equipment;
A2: system frame number (SFN) of a cell to be accessed by the user equipment and an offset;
A3: after the user equipment receives a signaling carrying the validity period information, a first specified slot position or sub-frame position of a cell to be accessed by the user equipment;
A4: a preset moment when a first timer expires, where the first timer is started when the user equipment receives the signaling carrying the validity period information or when the user equipment obtains downlink synchronization of the cell to be accessed;
A5: a system frame number of a predetermined reference cell;
A6: a system frame number of a predetermined reference cell and offset;
A7: after the user equipment receives a signaling carrying the validity period information, a first specified slot position or sub-frame position of a predetermined reference cell.

For the offset in the items A2 and A6, a granularity is sub-frame, slot or symbol, that is, the offset specifies the number of sub-frames, or the number of slots, or the number of symbols.

For the item A1, for example, in a handover scenario or a PSCell change scenario, after the UE receives a command, the UE obtains downlink synchronization by reading the SSB, and simultaneously obtains the SFN of the target cell, so that the pre-configured uplink resources start to be considered to be valid at the following moment: SFN specified by a target access cell.

For the item A2, for example, in a handover scenario or a PSCell change scenario, after the UE receives a command, the UE obtains downlink synchronization by reading the SSB, and simultaneously obtains the SFN of the target cell, so that the pre-configured uplink resources start to be considered to be valid at the following moment:
SFN and sub-frames specified by a target access cell, that is, after reaching the specified SFN, the number of sub-frames specified by the offset; or,
SFN and slots specified by a target access cell, that is, after reaching the specified SFN, the number of slots specified by the offset; or,
SFN and symbols specified by a target access cell, that is, after reaching the specified SFN, the number of symbols specified by the offset.

For the predetermined reference cell in the items A5 and A6, the predetermined reference cell may be configured by the network device through signaling, or may be specified by the protocol. That is, the network device may configure cell identification information of the reference cell or identification information of a reference cell group to the user equipment, so that the user equipment knows which cell is used as a reference, or the reference cell determined by the protocol; for example, in the handover scenario, a source primary cell is used as a reference cell; or in a PSCell change scenario, a source PSCell is used as a reference cell.

For the items A5 and A6, for example, in a handover scenario or a PSCell change scenario, taking a source PCell or a source PSCell as a timing reference, the UE knows SFN of the serving cell, and pre-configured uplink resources of the target cell start to be considered to be valid when reaching the following specified moment:
specified SFN; or,
specified SFN and specified sub-frame; or,
specified SFN and specified slot; or,
specified SFN and specified symbol.

Optionally, the end time of the valid window is one of the following:
B1: system frame number of a cell to be accessed by the user equipment;
B2: system frame number of a cell to be accessed by the user equipment and an offset;
B3: a preset moment when a second timer expires, where the second timer is started at the start time of the valid window, or a first valid uplink resource occasion in a target resource, or a moment when the user equipment receives the signaling carrying the validity period information; where the length of the valid window is duration of the second timer;
B4: system frame number of a predetermined reference cell;
B5: system frame number of a predetermined reference cell and offset;
B6: a moment when the number of repetitions of valid uplink resource occasions reaches a first preset number of times, where the length of the valid window is the first preset number of times of the uplink resource occasions;
B7: a moment when the number of repetitions of valid uplink resource cycles reaches a second preset number of times, where the length of the valid window is the second preset number of times of the valid uplink resource cycles;
B8: a timeout moment of a third timer for controlling cell handover or synchronization reconfiguration.

For the offset in the items B2 and B5, a granularity is sub-frame, slot or symbol.

For the item B1, it means that the UE considers that pre-configured uplink resources of the target cell (i.e., a cell to be accessed by the UE) become invalid after reaching the following moment: specified SFN.

For the item B2, it means that the UE considers that pre-configured uplink resources of the target cell (i.e., a cell to be accessed by the UE) become invalid after reaching the following moment:
specified SFN and specified sub-frames; or,
specified SFN and specified slots; or,
specified SFN and specified symbols.

For the item B3, it means that the UE starts the second timer at the start time of the valid window of the target resource; or, the UE starts the second timer at a first valid uplink resource occasion (for example, PUSCH occasion) in the target resource, i.e., a first valid uplink resource occasion such as PUSCH occasion in the valid window; after the timer expires, the UE considers that the target resource starts to be invalid; or, the UE starts the second timer at a moment when the user equipment receives the signaling carrying the validity period information, and, after the timer expires, the UE considers that the target resource is invalid. The second timer may be configured through signaling, for example, the network configures valid duration through system information or dedicated signaling, or the protocol specifies valid duration. The duration of the second timer is the length of the valid window.

For the item B4, for example, in a handover scenario or a PSCell change scenario, taking a source PCell or a source PSCell as a timing reference, the UE knows SFN of the serving cell, and pre-configured uplink resources of the target cell start to be considered to be invalid when reaching the following specified moment: specified SFN.

For the item B5, for example, in a handover scenario or a PSCell change scenario, taking a source PCell or a source PSCell as a timing reference, the UE knows SFN of the serving cell, and pre-configured uplink resources of the target cell start to be considered to be invalid when reaching the following specified moment:
specified SFN and specified sub-frame; or,
specified SFN and specified slot; or,
specified SFN and specified symbol.

For the item B6, it means that pre-configured uplink resources are considered to be invalid after the number of repetitions of uplink resource occasions such as physical uplink shared channel occasions (PUSCH occasions), starting from the start time of the valid window, reaches the specified number of times of the uplink resource occasions. In a multi-beam scenario, the uplink resource occasions may also include uplink resources for beam sweeping in a circle, that is, the uplink resource occasions may also include one uplink occasion such as PUSCH occasion on each configured beam. The duration of the second timer is the number of repetitions of valid uplink resource occasions, and the number of repetitions may be configured for the UE through signaling.

For the item B7, it means that the pre-configured uplink resources are considered to be invalid, after the number of repetitions of uplink resource cycles, starting from the start time of the valid window, reaches a specified number of repetition cycles. The cycle is a repetition cycle of uplink resources configured for the network. The duration of the second timer is the number of repetitions of the valid uplink resource cycles, and the number of repetitions may be configured for the UE through signaling.

The third timer in the item B8 is a timer that controls the UE to determine failure of handover or synchronization reconfiguration procedure, which may be specifically a timer T304 or a timer T307.

Optionally, the target resource includes a physical uplink control channel (PUCCH) resource and/or a physical uplink shared channel (PUSCH) resource.

That is, the target resource may include only PUCCH resource, may only include PUSCH resource, or may include PUCCH resource and PUSCH resource.

It should be noted that a length unit of the valid window may be described in a time unit. For example, the length of the valid window may be the duration of the foregoing second timer, for example, in milliseconds (ms), slot, SFN, or sub-frame as a unit of measurement. The length of the valid window may also be described by the number of times of a certain behavior. For example, the length of the valid window may be the number of repetitions of valid uplink resource occasions or the number of repetitions of uplink resource cycles, that is, the uplink resource occasion or uplink resource cycle is taken as a unit of measurement.

Optionally, the receiving the validity period information of the target resource sent by the network device, includes:
in a cell handover procedure, or in a cell synchronization reconfiguration procedure, or in a secondary cell group synchronization reconfiguration procedure, or in a secondary cell addition procedure, or in a secondary cell modification procedure, or in a procedure in which downlink data arrives and uplink is out of synchronization, receiving the validity period information of the target resource sent by the network device.

That is, the uplink resource configuration method of the embodiment of the present disclosure is applicable to the following scenarios:
a cell handover procedure, a cell synchronization reconfiguration procedure, a secondary cell group synchronization reconfiguration procedure, a secondary cell addition procedure, a secondary cell modification procedure, or a procedure in which downlink data arrives and uplink is out of synchronization.

Specifically, in a handover scenario, the target cell provides the validity period information, and the validity period information may be sent to the UE through an RRC message handover command, i.e., a synchronization reconfiguration message or an RRC reconfiguration message; or, the validity period information may be provided through MAC CE or a PDCCH message of the source cell.

In an SCG synchronization reconfiguration scenario (i.e., synchronization reconfiguration scenario such as PSCell change or within PSCell cell), the validity period information may be sent to the UE through an RRC message, i.e., an SCG synchronization reconfiguration message, or MAC CE or a PDCCH message of the source PCell or source PSCell cell.

In a secondary cell (SCell) addition or modification scenario, the validity period information may be provided by an RRC message of the serving cell PCell or PSCell. The RRC message may be one of an RRC reconfiguration message, an RRC recovery message, an RRC reestablishment cell, and an RRC establishment message. The validity period information may also be provided by MAC CE or a PDCCH message of the serving cell PCell or PSCell. The validity period information may also be provided by a PDCCH message of a serving cell SCell.

In a scenario in which downlink data arrives and uplink is out of synchronization (for example, a geographical position of UE remains unchanged during movement of a satellite, the satellite may obtain TA according to the geographical position of the UE and the current position of the satellite), a serving cell provides the validity period information, for example, through an RRC signaling, or MAC CE or PDCCH message.

Optionally, the configuration information of the timing advance includes:
timing advance; or,
a timing advance reference cell and a time difference with a timing advance of the reference cell.

In case that the network device configures a timing advance for the UE, after the UE obtains a timing advance of a cell to be accessed, the UE adjusts uplink transmission time according to the provided timing advance, and sends uplink data to the cell within configured available uplink resources.

In case that the network device configures a timing advance reference cell and a time difference with a timing advance of the reference cell for the UE, the UE calculates a TA of a cell to be accessed by the UE according to the TA of the reference cell combined with a time difference between the reference cell and the cell to be accessed by the UE, so as to adjust uplink transmission time, and then sends uplink data to the cell to be accessed by the UE within configured available uplink resources.

Optionally, the network device may calculate the TA based on the following information:
geographical location information of the UE;
geographic location relationship between a source cell or a designated serving cell and a target cell;
geographical location information of the target cell itself;
timing relationship between a source cell or a designated serving cell and the target cell.

Optionally, the method further includes:
adjusting uplink transmission time according to the configuration information of the timing advance;
   and/or,
sending uplink data within the valid window of the target resource.

Optionally, the network device also needs to provide specific configuration information of the target resource, and the configuration information may include at least one of the following:
repetition cycle;
SFN and/or a slot where an uplink resource is located in the cycle;
SFN and/or a sub-frame where the uplink resource is located in the cycle;
SFN and/or a symbol where the uplink resource is located in the cycle;
a starting position of the SFN and/or a starting position of the slot where the uplink resource is located in the cycle;
a starting position of the SFN and/or a starting position of the sub-frame where the uplink resource is located in the cycle;
a starting position of the SFN and/or a starting position of the symbol where the uplink resource is located in the cycle;
a specific valid slot and/or a valid symbol position within a valid time period;
a specific valid sub-frame position and/or a valid symbol position within the valid time period;
a starting time of the specific valid slot and/or a starting time of the valid symbol position within the valid time period;
a starting time of the specific valid sub-frame position and/or a starting time of the valid symbol position within the valid time period;
the number of consecutive valid symbols in the slot or sub-frame where the uplink resource is located;
the number of consecutive valid slots or sub-frames in the SFN where the uplink resource is located.

Considering that the NR system supports multi-beam scenarios, the configuration information of the uplink resources may further include an SSB index to associate related SSBs.

Optionally, the validity period information may be expressed in a form of a bitmap and/or a specific information element (IE) indication.

Optionally, after receiving the validity period information of the target resource sent by the network device, the method further includes at least one of the following:
releasing the target resource when receiving physical downlink control channel scheduling, where the physical downlink control channel scheduling is scrambled with the cell radio network temporary identifier of the user equipment;
releasing the target resource when the third timer for controlling cell handover or synchronization reconfiguration, expires;
releasing the target resource when receiving a feedback message that the uplink data is successfully received;
releasing the target resource when the random access is completed.

That is, the UE needs to release the target resource before a validity period of the target resource ends in the following scenarios:
when the PDCCH scheduling is received, and the PDCCH scheduling is scrambled with the CRNTI of the UE;
when the third timer (such as a timer T304 or a timer T307) expires;
when receiving feedback that the uplink data is successfully received, where the feedback may be HARQ ACK response or ARQ ACK response;
when the random access procedure is completed.

Optionally, the method further includes:
receiving dedicated random access resources configured by the network device.

After receiving the validity period information of the target resource sent by the network device, the method further includes one of the following:
C1: in a validity period of the target resource, sending uplink data on the target resource, and not triggering random access before the validity period of the target resource ends, that is, a priority of the target resource is always higher than a priority of dedicated RACH resources;
C2: ignoring the target resource and triggering random access, that is, a priority of dedicated RACH resource is always higher than a priority of the target resource;
C3: receiving indication information sent by the network device, and triggering random access or sending uplink data on the target resource according to the indication information, where the indication information is used to indicate priorities of the target resource and the dedicated random access resource, that is, the processing is performed according to priorities indicated by the network device; for example, if the network device indicates that the priority of the dedicated random access resource is higher than the priority of the pre-configured uplink resource, the UE will trigger the random access procedure preferentially, and this indication is also applicable to a multi-beam scenario in which there are both dedicated random access resources and target resources for a selected beam, the UE performs processing according to priorities indicated by the network device;
C4: triggering random access before the validity period of the target resource starts and/or after the validity period of the target resource ends;
C5: in case there is a valid configuration of the target resource on a first beam selected for access, sending uplink data on the target resource within the validity period of the target resource, otherwise triggering random access; considering a multi-beam scenario, some dedicated configurations may not exist on the beam selected for access; for example, in case that there is no pre-configured uplink resource on the beam, the UE triggers a random access procedure; in case that there is a pre-configured uplink resource on the beam, then, the UE sends the uplink data to an access cell according to the configured uplink resource within the specified validity period;
C6: in case that there is a valid configuration of dedicated random access resource on a second beam selected for access, triggering random access on the second beam; considering the multi-beam scenario, some dedicated configurations may not exist on the beam selected for access; for example, there is no dedicated random access resource on the beam, but there is only the target resource, i.e., uplink resource, configured by the network device for the UE, on the beam, then the UE sends the uplink data to an access cell according to the configured uplink resource within the specified validity period; in case that there are dedicated random access resources and target resources at the same time, the UE triggers a random access procedure on the selected beam.

That is, in the case where uplink resources are reserved for the UE and dedicated RACH resources are configured at the same time, any one of the foregoing C1 to C6 can be used for processing.

Optionally, after receiving the validity period information of the target resource sent by the network device, the method further includes one of the following:
D1: triggering random access before the validity period of the target resource starts and/or after the validity period ends; where, specifically, in case that a dedicated RACH resource is configured, before the validity period of the target resource starts and/or after the validity period ends, triggering non-contention random access; in case that dedicated RACH resources are not configured, triggering contention random access before the validity period of the target resource starts and/or after the validity period ends;
D2: in case that there is a valid configuration of the target resource on a third beam selected for access, sending uplink data on the target resource within the validity period of the target resource, otherwise triggering random access; considering the multi-beam scenario, configuration of the target resource may not exist on the beam selected for access, then the UE triggers random access on the beam at this time; in case that a dedicated RACH resource is configured, triggering non-contention random access before the validity period of the target resource starts and/or after the validity period ends; in case that the dedicated RACH resource is not configured, triggering contention random access before the validity period of the target resource starts and/or after the validity period ends.

That is, in the case where uplink resources are reserved for the UE, no matter whether dedicated RACH resources are configured for the UE, any one of the foregoing D1 and D2 can be used for processing.

Of course, it can be understood that it may also be specified that the network device is not allowed to reserve uplink resources for the UE while simultaneously configuring dedicated RACH resources, or it may be specified that the network device is not allowed to, on the same beam, reserve uplink resources for the UE while simultaneously configuring dedicated RACH resources.

Optionally, the method further includes:
receiving configuration information of a third timer (for example, a timer T304 or a timer T307) sent by the network device, where the third timer is a timer used to control cell handover or synchronization reconfiguration.

After receiving the validity period information of the target resource sent by the network device, the method further includes one of the following:
E1: when receiving a signaling carrying the validity period information, starting the third timer;
E2: ignoring the third timer;
E3: starting the third timer when the validity period of the target resource ends;
E4: starting the third timer when the validity period of the target resource starts.

That is, in the case where uplink resources are reserved for the UE and a timer such as a timer T304 or a timer T307 for controlling handover or synchronization reconfiguration is configured simultaneously, any one of the foregoing E1 to E4 can be used for processing.

Of course, it can be understood that it may also be specified that the network device is not allowed to reserve uplink resources for the UE while simultaneously configuring a timer for controlling cell handover or synchronization reconfiguration.

In summary, in the embodiments of the present disclosure, TA and the validity period information of uplink resources reserved for the UE can be provided for the UE. Compared with providing repeated reserved uplink resources, providing specific validity period information can save reserved uplink resources, and enables to skip the random access procedure and switch to the target cell on the premise of saving air interface resources of the cell to be accessed by the UE, and enables the UE to switch to the target cell by skipping the random access procedure on the target cell that is not synchronized with the serving cell.

### Third embodiment

As shown in FIG. 5, a network device of one embodiment of the present disclosure includes the following functional modules:
a resource reservation module 51 configured to reserve an uplink resource for user equipment as a target resource;
an information determining module 52 configured to determine validity period information of the target resource;
a validity period sending module 53 configured to send the validity period information to the user equipment.

Optionally, the validity period information includes at least one of synchronization signal and PBCH block index (SSB index) associated with the target resource, a start time of a valid window, an end time of the valid window, a length of the valid window, a cycle of the target resource and configuration information of timing advance.

Optionally, the start time of the valid window is one of the following:
system frame number (SFN) of a cell to be accessed by the user equipment;
system frame number (SFN) of a cell to be accessed by the user equipment and an offset;
after the user equipment receives a signaling carrying the validity period information, a first specified slot position or sub-frame position of a cell to be accessed by the user equipment;
a preset moment when a first timer expires, where the first timer is started when the user equipment receives the signaling carrying the validity period information or when the user equipment obtains downlink synchronization of the cell to be accessed;
a system frame number of a predetermined reference cell;
a system frame number of a predetermined reference cell and offset;
after the user equipment receives a signaling carrying the validity period information, a first specified slot position or sub-frame position of a predetermined reference cell.

Optionally, the end time of the valid window is one of the following:
system frame number of a cell to be accessed by the user equipment;
system frame number of a cell to be accessed by the user equipment and an offset;
a preset moment when a second timer expires, where the second timer is started at the start time of the valid window, or a first valid uplink resource occasion in a target resource, or a moment when the user equipment receives the signaling carrying the validity period information; where the length of the valid window is duration of the second timer;
system frame number of a predetermined reference cell;
system frame number of a predetermined reference cell and offset;
a moment when the number of repetitions of valid uplink resource occasions reaches a first preset number of times, where the length of the valid window is the first preset number of times of the uplink resource occasions;
a moment when the number of repetitions of valid uplink resource cycles reaches a second preset number of times, where the length of the valid window is the second preset number of times of the valid uplink resource cycles;
a timeout moment of a third timer for controlling cell handover or synchronization reconfiguration.

Optionally, the target resource includes a physical uplink control channel (PUCCH) resource and/or a physical uplink shared channel (PUSCH) resource.

Optionally, the validity period sending module is specifically configured to,
in a cell handover procedure, or in a cell synchronization reconfiguration procedure, or in a secondary cell group synchronization reconfiguration procedure, or in a secondary cell addition procedure, or in a secondary cell modification procedure, or in a procedure in which downlink data arrives and uplink is out of synchronization, send the validity period information to the user equipment.

Optionally, the configuration information of the timing advance includes:
timing advance; or,
a timing advance reference cell and a time difference with a timing advance of the reference cell.

It can be understood that the network device provided in the embodiments of the present disclosure can implement each process of the foregoing uplink resource configuration method, and the relevant explanations about the uplink resource configuration method are all applicable to the network device, and will not be repeated here.

### Fourth embodiment

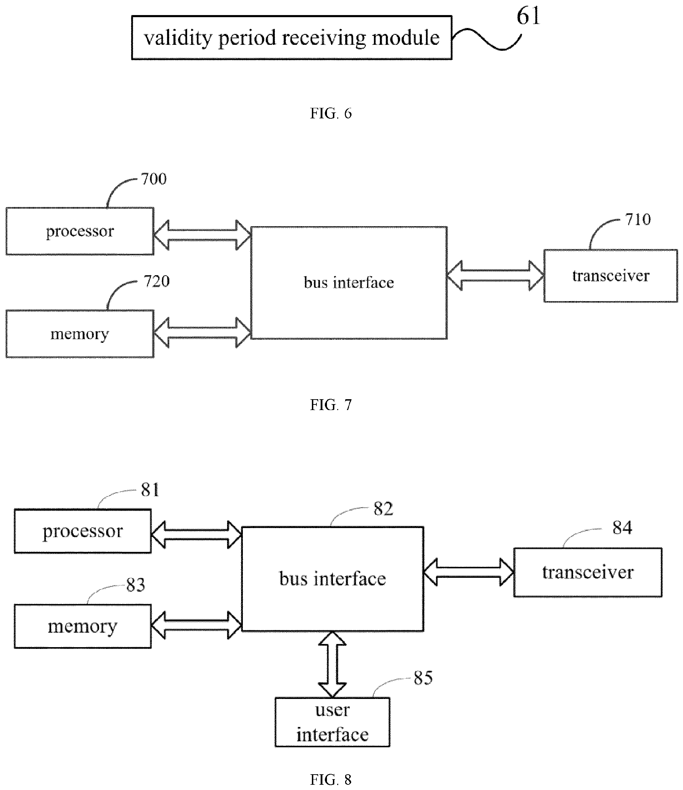

As shown in FIG. 6, a user equipment (UE) of one embodiment of the present disclosure includes the following functional modules:
a validity period receiving module 61 configured to receive validity period information of a target resource sent by a network device, where the target resource is an uplink resource reserved for the user equipment.

Optionally, the validity period information includes at least one of synchronization signal and PBCH block index (SSB index) associated with the target resource, a start time of a valid window, an end time of the valid window, a length of the valid window, a cycle of the target resource and configuration information of timing advance.

Optionally, the start time of the valid window is one of the following:
system frame number (SFN) of a cell to be accessed by the user equipment;
system frame number (SFN) of a cell to be accessed by the user equipment and an offset;
after the user equipment receives a signaling carrying the validity period information, a first specified slot position or sub-frame position of a cell to be accessed by the user equipment;
a preset moment when a first timer expires, where the first timer is started when the user equipment receives the signaling carrying the validity period information or when the user equipment obtains downlink synchronization of the cell to be accessed;
a system frame number of a predetermined reference cell;
a system frame number of a predetermined reference cell and offset;
after the user equipment receives a signaling carrying the validity period information, a first specified slot position or sub-frame position of a predetermined reference cell.

Optionally, the end time of the valid window is one of the following:
system frame number of a cell to be accessed by the user equipment;
system frame number of a cell to be accessed by the user equipment and an offset;
a preset moment when a second timer expires, where the second timer is started at the start time of the valid window, or a first valid uplink resource occasion in a target resource, or a moment when the user equipment receives the signaling carrying the validity period information; where the length of the valid window is duration of the second timer;
system frame number of a predetermined reference cell;
system frame number of a predetermined reference cell and offset;
a moment when the number of repetitions of valid uplink resource occasions reaches a first preset number of times, where the length of the valid window is the first preset number of times of the uplink resource occasions;
a moment when the number of repetitions of valid uplink resource cycles reaches a second preset number of times, where the length of the valid window is the second preset number of times of the valid uplink resource cycles;
a timeout moment of a third timer for controlling cell handover or synchronization reconfiguration.

Optionally, the target resource includes a physical uplink control channel (PUCCH) resource and/or a physical uplink shared channel (PUSCH) resource.

Optionally, the validity period receiving module is specifically configured to,
in a cell handover procedure, or in a cell synchronization reconfiguration procedure, or in a secondary cell group synchronization reconfiguration procedure, or in a secondary cell addition procedure, or in a secondary cell modification procedure, or in a procedure in which downlink data arrives and uplink is out of synchronization, receive the validity period information of the target resource sent by the network device.

Optionally, the configuration information of the timing advance includes:
timing advance; or,
a timing advance reference cell and a time difference with a timing advance of the reference cell.

Optionally, the user equipment further includes:
an adjustment module configured to adjust uplink transmission time according to the configuration information of the timing advance;
   and/or,
an uplink sending module configured to send uplink data within the valid window of the target resource.

Optionally, the user equipment further includes one of the following modules:
a first release module configured to release the target resource when receiving physical downlink control channel scheduling, where the physical downlink control channel scheduling is scrambled with the cell radio network temporary identifier of the user equipment;
a second release module configured to release the target resource when the third timer for controlling cell handover or synchronization reconfiguration, expires;
a third release mode configured to release the target resource when receiving a feedback message that the uplink data is successfully received;
a fourth release module configured to release the target resource when the random access is completed.

Optionally, the user equipment further includes:
a resource receiving module configured to receive dedicated random access resources configured by the network device.

Optionally, the user equipment further includes one of the following:
a first processing module configured to, in a validity period of the target resource, send uplink data on the target resource, and not triggering random access before the validity period of the target resource ends;
a second processing module configured to ignore the target resource and trigger random access;
a third processing module configured to receive indication information sent by the network device, and trigger random access or send uplink data on the target resource according to the indication information, where the indication information is used to indicate priorities of the target resource and the dedicated random access resource;
a fourth processing module configured to trigger random access before the validity period of the target resource starts and/or after the validity period of the target resource ends;
a fifth processing module configured to, in case there is a valid configuration of the target resource on a first beam selected for access, send uplink data on the target resource within the validity period of the target resource, otherwise trigger random access;
a sixth processing module configured to, in case that there is a valid configuration of dedicated random access resource on a second beam selected for access, trigger random access on the second beam.

Optionally, the user equipment further includes one of the following modules:
an eighth processing module configured to trigger random access before the validity period of the target resource starts and/or after the validity period ends;
a ninth processing module configured to, in case that there is a valid configuration of the target resource on a third beam selected for access, send uplink data on the target resource within the validity period of the target resource, otherwise trigger random access;

Optionally, the user equipment further includes:
a timer configuration receiving module configured to receive configuration information of a third timer sent by the network device, where the third timer is a timer used to control cell handover or synchronization reconfiguration.

Optionally, the user equipment further includes one of the following modules:
a first starting module configured to, when receiving a signaling carrying the validity period information, start the third timer;
an ignoring-processing module configured to ignore the third timer;
a second start module configured to start the third timer when the validity period of the target resource ends;
a third starting module configured to start the third timer when the validity period of the target resource starts.

It can be understood that the user equipment provided in the embodiments of the present disclosure can implement each process of the foregoing uplink resource configuration method, and the relevant explanations about the uplink resource configuration method are all applicable to the user equipment, and will not be repeated here.

### Fifth embodiment

In order to better achieve the foregoing object, as shown in FIG. 7, one example of the present disclosure further provides a network device. The network device includes: a processor 700, a memory 720 coupled to the processor 700 through a bus interface, and a transceiver 710 coupled to the processor 700 through a bus interface. The memory 720 is configured to store programs and data used by the processor when performing operations. The transceiver 710 is configured to send data information or pilots, and receive uplink control channels. The processor 700 calls and executes the programs and data stored in the memory 720 to implement the following functions:

the transceiver 710 executes the computer programs to implement the following steps:
reserving an uplink resource for user equipment as a target resource;
determining the validity period information of the target resource;
sending the validity period information to the user equipment.

Optionally, the validity period information includes at least one of synchronization signal and PBCH block index (SSB index) associated with the target resource, a start time of a valid window, an end time of the valid window, a length of the valid window, a cycle of the target resource and configuration information of timing advance.

Optionally, the start time of the valid window is one of the following:
system frame number (SFN) of a cell to be accessed by the user equipment;
system frame number (SFN) of a cell to be accessed by the user equipment and an offset;
after the user equipment receives a signaling carrying the validity period information, a first specified slot position or sub-frame position of a cell to be accessed by the user equipment;
a preset moment when a first timer expires, where the first timer is started when the user equipment receives the signaling carrying the validity period information or when the user equipment obtains downlink synchronization of the cell to be accessed;
a system frame number of a predetermined reference cell;
a system frame number of a predetermined reference cell and offset;
after the user equipment receives a signaling carrying the validity period information, a first specified slot position or sub-frame position of a predetermined reference cell.

Optionally, the end time of the valid window is one of the following:
system frame number of a cell to be accessed by the user equipment;
system frame number of a cell to be accessed by the user equipment and an offset;
a preset moment when a second timer expires, where the second timer is started at the start time of the valid window, or a first valid uplink resource occasion in a target resource, or a moment when the user equipment receives the signaling carrying the validity period information; where the length of the valid window is duration of the second timer;
system frame number of a predetermined reference cell;
system frame number of a predetermined reference cell and offset;
a moment when the number of repetitions of valid uplink resource occasions reaches a first preset number of times, where the length of the valid window is the first preset number of times of the uplink resource occasions;
a moment when the number of repetitions of valid uplink resource cycles reaches a second preset number of times, where the length of the valid window is the second preset number of times of the valid uplink resource cycles;
a timeout moment of a third timer for controlling cell handover or synchronization reconfiguration.

Optionally, the target resource includes a physical uplink control channel (PUCCH) resource and/or a physical uplink shared channel (PUSCH) resource.

Optionally, the transceiver 710 executes the computer programs to implement the following steps:

in a cell handover procedure, or in a cell synchronization reconfiguration procedure, or in a secondary cell group synchronization reconfiguration procedure, or in a secondary cell addition procedure, or in a secondary cell modification procedure, or in a procedure in which downlink data arrives and uplink is out of synchronization, sending the validity period information to the user equipment.

Optionally, the configuration information of the timing advance includes:
timing advance; or,
a timing advance reference cell and a time difference with a timing advance of the reference cell.

In FIG. 7, a bus architecture may include any number of interconnected buses and bridges. Specifically, various circuits of one or more processors, which are represented by the processor 700, and the memory, which is represented by the memory 720, are linked together. The bus architecture may link various other circuits, such as a peripheral device, voltage regulator and a power management circuit together. These features are well known in this field, therefore, the present disclosure does not make further description on these features. The bus interface provides an interface. The transceiver 710 may be multiple elements, including a transmitter and a receiver and provide units, which communicate with other devices on the transmission medium. The processor 700 is responsible for managing the bus architecture and common processing and the memory 720 may store data used by the processor 700 when executing the operations.

Those skilled in the art can understand that all or part of the steps in the foregoing embodiments may be implemented by hardware, or may be implemented by instructing relevant hardware through a computer program. The computer program includes instructions for executing part or all of the steps of the foregoing method; and the computer program may be stored in a readable storage medium, which can be any form of storage medium.

### Sixth embodiment

As shown in FIG. 8, one example of the present disclosure provides a user equipment, including:
a processor 81, and a memory 83 coupled to the processor 81 through a bus interface 82. The memory 83 is configured to store programs and data used by the processor 81 when performing operations. The processor 81 calls and executes the programs and data stored in the memory 83 to implement the following process.

A transceiver 84 is coupled to the bus interface 82 for receiving and sending data under the control of the processor 81.

Specifically, the transceiver 84 executes the computer program to implement the following steps:
receiving validity period information of a target resource sent by a network device, where the target resource is an uplink resource reserved for the user equipment.

Optionally, the validity period information includes at least one of synchronization signal and PBCH block index (SSB index) associated with the target resource, a start time of a valid window, an end time of the valid window, a length of the valid window, a cycle of the target resource and configuration information of timing advance.

Optionally, the start time of the valid window is one of the following:
system frame number (SFN) of a cell to be accessed by the user equipment;
system frame number (SFN) of a cell to be accessed by the user equipment and an offset;
after the user equipment receives a signaling carrying the validity period information, a first specified slot position or sub-frame position of a cell to be accessed by the user equipment;
a preset moment when a first timer expires, where the first timer is started when the user equipment receives the signaling carrying the validity period information or when the user equipment obtains downlink synchronization of the cell to be accessed;
a system frame number of a predetermined reference cell;
a system frame number of a predetermined reference cell and offset;
after the user equipment receives a signaling carrying the validity period information, a first specified slot position or sub-frame position of a predetermined reference cell.

Optionally, the end time of the valid window is one of the following:
system frame number of a cell to be accessed by the user equipment;
system frame number of a cell to be accessed by the user equipment and an offset;
a preset moment when a second timer expires, where the second timer is started at the start time of the valid window, or a first valid uplink resource occasion in a target resource, or a moment when the user equipment receives the signaling carrying the validity period information; where the length of the valid window is duration of the second timer;
system frame number of a predetermined reference cell;
system frame number of a predetermined reference cell and offset;
a moment when the number of repetitions of valid uplink resource occasions reaches a first preset number of times, where the length of the valid window is the first preset number of times of the uplink resource occasions;
a moment when the number of repetitions of valid uplink resource cycles reaches a second preset number of times, where the length of the valid window is the second preset number of times of the valid uplink resource cycles;
a timeout moment of a third timer for controlling cell handover or synchronization reconfiguration.

Optionally, the target resource includes a physical uplink control channel (PUCCH) resource and/or a physical uplink shared channel (PUSCH) resource.

Optionally, the transceiver 84 executes the computer program to implement the following steps:
in a cell handover procedure, or in a cell synchronization reconfiguration procedure, or in a secondary cell group synchronization reconfiguration procedure, or in a secondary cell addition procedure, or in a secondary cell modification procedure, or in a procedure in which downlink data arrives and uplink is out of synchronization, receiving the validity period information of the target resource sent by the network device.

Optionally, the configuration information of the timing advance includes:
timing advance; or,
a timing advance reference cell and a time difference with a timing advance of the reference cell.

Optionally, the transceiver 84 executes the computer program to implement the following steps:
adjusting uplink transmission time according to the configuration information of the timing advance;
   and/or,
sending uplink data within the valid window of the target resource.

Optionally, after receiving the validity period information of the target resource sent by the network device, the transceiver 84 executes the computer program to implement at least one of the following:
releasing the target resource when receiving physical downlink control channel scheduling, where the physical downlink control channel scheduling is scrambled with the cell radio network temporary identifier of the user equipment;
releasing the target resource when the third timer for controlling cell handover or synchronization reconfiguration, expires;
releasing the target resource when receiving a feedback message that the uplink data is successfully received;
releasing the target resource when the random access is completed.

Optionally, the transceiver 84 executes the computer program to implement the following step:
receiving dedicated random access resources configured by the network device.

Optionally, after receiving the validity period information of the target resource sent by the network device, the transceiver 84 executes the computer program to implement at least one of the following:
in a validity period of the target resource, sending uplink data on the target resource, and not triggering random access before the validity period of the target resource ends;
ignoring the target resource and triggering random access;
receiving indication information sent by the network device, and triggering random access or sending uplink data on the target resource according to the indication information, where the indication information is used to indicate priorities of the target resource and the dedicated random access resource;
triggering random access before the validity period of the target resource starts and/or after the validity period of the target resource ends;
in case there is a valid configuration of the target resource on a first beam selected for access, sending uplink data on the target resource within the validity period of the target resource, otherwise triggering random access;
in case that there is a valid configuration of dedicated random access resource on a second beam selected for access, triggering random access on the second beam.

Optionally, after receiving the validity period information of the target resource sent by the network device, the transceiver 84 executes the computer program to implement at least one of the following:
triggering random access before the validity period of the target resource starts and/or after the validity period ends;
in case that there is a valid configuration of the target resource on a third beam selected for access, sending uplink data on the target resource within the validity period of the target resource, otherwise triggering random access.

Optionally, the transceiver 84 executes the computer program to implement the following:
receiving configuration information of a third timer sent by the network device, where the third timer is a timer used to control cell handover or synchronization reconfiguration.

Optionally, the transceiver 84 executes the computer program to implement at least one of the following:
when receiving a signaling carrying the validity period information, starting the third timer;
ignoring the third timer;
starting the third timer when the validity period of the target resource ends;
starting the third timer when the validity period of the target resource starts.

It should be noted that, In FIG. 8, a bus architecture may include any number of interconnected buses and bridges. Specifically, various circuits of one or more processors, which are represented by the processor 81, and the memory, which is represented by the memory 83, are linked together. The bus architecture may link various other circuits, such as a peripheral device, voltage regulator and a power management circuit together. These features are well known in this field, therefore, the present disclosure does not make further description on these features. The bus interface provides an interface. The transceiver 84 may be multiple elements, including a transmitter and a receiver and provide units, which communicate with other devices on the transmission medium. As for different UEs, the user interface 85 may further externally connect or internally connect interfaces of required devices. The connected devices may include but not be limited to a keypad, monitor, speaker, microphone, joystick, etc. The processor 81 is responsible for managing the bus architecture and usual processing and the memory 82 may store the data used by the processor 81 when executing the operations.

Those skilled in the art can understand that all or part of the steps in the foregoing embodiments may be implemented by hardware, or may be implemented by instructing relevant hardware through a computer program. The computer program includes instructions for executing part or all of the steps of the foregoing method; and the computer program may be stored in a readable storage medium, which can be any form of storage medium.

One example of the present disclosure further provides a computer-readable storage medium including a computer program stored thereon. The computer program is executed by a processor to perform each process in the embodiment of the uplink resource configuration method in the embodiment of the present disclosure, to achieve the same technical effects, which will not be repeated here to avoid repetition. The computer-readable storage medium may be, for example, a read-only memory (ROM), a random access memory (RAM), a magnetic disk or an optical disk.

In addition, it should be noted that in the devices and methods of the present disclosure, apparently, each component or each step may be decomposed and/or recombined. These decomposition and/or recombination should be regarded as equivalent solutions of the present disclosure. In addition, the steps of performing the above series of processing may be performed naturally in chronological order in the order of description, but do not necessarily need to be performed in chronological order, and some steps may be performed in parallel or independently of each other. Those of ordinary skill in the art can understand that all or any of the steps or components of the method and device of the present disclosure may be implemented in hardware, firmware, software or a combination thereof in any computing device (including processor, storage medium, etc.) or network of computing devices, which can be achieved by those of ordinary skill in the art with their basic programming skills after reading the description of the present disclosure.

Therefore, the object of the present disclosure may also be achieved by running a program or a set of programs on any computing device. The computing device may be a well-known universal device. Therefore, the object of the present disclosure may also be achieved only by providing a program product containing program codes for implementing the method or device. In other words, such a program product also constitutes the present disclosure, and a storage medium storing such a program product also constitutes the present disclosure. Apparently, the storage medium may be any known storage medium or any storage medium developed in the future. It should also be noted that in the devices and methods of the present disclosure, apparently, each component or each step may be decomposed and/or recombined. These decomposition and/or recombination should be regarded as equivalent solutions of the present disclosure. In addition, the steps of performing the above series of processing may be performed naturally in chronological order in the order of description, but do not necessarily need to be performed in chronological order, and some steps may be performed in parallel or independently of each other.

It can be understood that those embodiments described in the embodiments of the present disclosure may be implemented by hardware, software, firmware, middleware, microcode, or a combination thereof. For implementation with hardware, units, modules, sub-units and sub-modules may be implemented in one or more application specific integrated circuits (ASIC), a digital signal processor (DSP), a digital signal processing device (DSP Device, DSPD), a programmable logic device (PLD), a field-programmable gate array (PFGA), a general processor, a controller, a micro-controller, a microprocessor, another electronic unit for implementing the functions of the present disclosure, or their combinations.

For implementation by software, technologies described in the embodiments of the present disclosure may be implemented by executing functional modules (for example, a process and a function) in the embodiments of the present disclosure. Software codes can be stored in the memory and executed by the processor. The memory can be implemented inside or outside the processor.

## Claims

1. An uplink resource configuration method, performed by a network device, **characterized by** comprising:
reserving (31) an uplink resource for user equipment, UE, as a target resource of a target cell of a random access channel less, RACH-less, handover procedure;
determining (32) validity period information of the target resource; and
sending (33) the validity period information to the user equipment;
wherein the validity period information includes synchronization signal and PBCH block, SSB index associated with the target resource, a cycle of the target resource and at least one of a start time of a valid window, an end time of the valid window, a length of the valid window or configuration information of timing advance.

2. The method according to claim 1, wherein the start time of the valid window is one of: a system frame number, SFN, of a cell to be accessed by the user equipment; the system frame number of the cell to be accessed by the user equipment and an offset; after the user equipment receives a signaling carrying the validity period information, a first specified slot position or sub-frame position of the cell to be accessed by the user equipment; a preset moment when a first timer expires, wherein the first timer is started when the user equipment receives the signaling carrying the validity period information or when the user equipment obtains downlink synchronization of the cell to be accessed; a system frame number of a predetermined reference cell; the system frame number of the predetermined reference cell and offset; after the user equipment receives the signaling carrying the validity period information, a first specified slot position or sub-frame position of the predetermined reference cell;
wherein the end time of the valid window is one of: a system frame number of a cell to be accessed by the user equipment; the system frame number of the cell to be accessed by the user equipment and an offset; a preset moment when a second timer expires, wherein the second timer is started at the start time of the valid window, or a first valid uplink resource occasion in the target resource, or a moment when the user equipment receives the signaling carrying the validity period information; wherein the length of the valid window is duration of the second timer; a system frame number of a predetermined reference cell; the system frame number of the predetermined reference cell and an offset; a moment when the number of repetitions of valid uplink resource occasions reaches a first preset number of times, wherein the length of the valid window is the first preset number of times of the uplink resource occasions; a moment when the number of repetitions of valid uplink resource cycles reaches a second preset number of times, wherein the length of the valid window is the second preset number of times of the valid uplink resource cycles; a timeout moment of a third timer for controlling cell handover or synchronization reconfiguration;
wherein the configuration information of the timing advance includes one of: timing advance; a timing advance reference cell and a time difference with a timing advance of the reference cell.

3. The method according to claim 1, wherein the target resource includes a physical uplink control channel, PUCCH, resource and/or a physical uplink shared channel, PUSCH, resource.

4. The method according to claim 1, wherein the sending the validity period information to the user equipment, includes:
in a cell handover procedure, or in a cell synchronization reconfiguration procedure, or in a secondary cell group synchronization reconfiguration procedure, or in a secondary cell addition procedure, or in a secondary cell modification procedure, or in a procedure in which downlink data arrives and uplink is out of synchronization, sending the validity period information to the user equipment.

5. An uplink resource configuration method, performed by a user equipment, UE, **characterized by** comprising:
receiving (41) validity period information of a target resource of a target cell of a random access channel less, RACH-less, handover procedure, sent by a network device;
wherein the target resource is an uplink resource reserved for the user equipment; wherein the validity period information includes synchronization signal and PBCH block, SSB, index associated with the target resource, a cycle of the target resource and at least one of a start time of a valid window, an end time of the valid window, a length of the valid window or configuration information of timing advance.

6. The method according to claim 5, wherein the start time of the valid window is one of: a system frame number, SFN, of a cell to be accessed by the user equipment; the system frame number of the cell to be accessed by the user equipment and an offset; after the user equipment receives a signaling carrying the validity period information, a first specified slot position or sub-frame position of the cell to be accessed by the user equipment; a preset moment when a first timer expires, wherein the first timer is started when the user equipment receives the signaling carrying the validity period information or when the user equipment obtains downlink synchronization of the cell to be accessed;
a system frame number of a predetermined reference cell; the system frame number of the predetermined reference cell and offset; after the user equipment receives the signaling carrying the validity period information, a first specified slot position or sub-frame position of the predetermined reference cell;
wherein the end time of the valid window is one of: a system frame number of a cell to be accessed by the user equipment; the system frame number of the cell to be accessed by the user equipment and an offset; a preset moment when a second timer expires, wherein the second timer is started at the start time of the valid window, or a first valid uplink resource occasion in the target resource, or a moment when the user equipment receives the signaling carrying the validity period information; wherein the length of the valid window is duration of the second timer; a system frame number of a predetermined reference cell; the system frame number of the predetermined reference cell and an offset; a moment when the number of repetitions of valid uplink resource occasions reaches a first preset number of times, wherein the length of the valid window is the first preset number of times of the uplink resource occasions; a moment when the number of repetitions of valid uplink resource cycles reaches a second preset number of times, wherein the length of the valid window is the second preset number of times of the valid uplink resource cycles; a timeout moment of a third timer for controlling cell handover or synchronization reconfiguration.

7. The method according to claim 5, wherein the target resource includes a physical uplink control channel, PUCCH, resource and/or a physical uplink shared channel, PUSCH, resource.

8. The method according to claim 5, wherein the receiving validity period information of a target resource sent by a network device, includes: in a cell handover procedure, or in a cell synchronization reconfiguration procedure, or in a secondary cell group synchronization reconfiguration procedure, or in a secondary cell addition procedure, or in a secondary cell modification procedure, or in a procedure in which downlink data arrives and uplink is out of synchronization, receiving the validity period information of the target resource sent by the network device.

9. The method according to claim 5, wherein the configuration information of the timing advance includes one of: timing advance, a timing advance reference cell and a time difference with a timing advance of the reference cell.

10. The method according to claim 5, wherein the method further includes at least one of: adjusting uplink transmission time according to the configuration information of the timing advance, or sending uplink data within the valid window of the target resource.

11. The method according to claim 5, wherein after receiving validity period information of a target resource sent by a network device, the method further includes at least one of the following:
releasing the target resource when receiving physical downlink control channel scheduling, wherein the physical downlink control channel scheduling is scrambled with a cell radio network temporary identifier of the user equipment;
releasing the target resource when a third timer for controlling cell handover or synchronization reconfiguration, expires;
releasing the target resource when receiving a feedback message that uplink data is successfully received;
releasing the target resource when a random access is completed;
triggering random access before the validity period of the target resource starts and/or after the validity period ends; or,
in case that there is a valid configuration of the target resource on a third beam selected for access, sending uplink data on the target resource within the validity period of the target resource, otherwise triggering random access.

12. The method according to claim 5, wherein the method further includes: receiving dedicated random access resources configured by the network device;
wherein after receiving validity period information of a target resource sent by a network device, the method further includes at least one of the following:
in a validity period of the target resource, sending uplink data on the target resource, and not triggering random access before the validity period of the target resource ends;
ignoring the target resource and triggering random access;
receiving indication information sent by the network device, and triggering random access or sending uplink data on the target resource according to the indication information, wherein the indication information is used to indicate priorities of the target resource and the dedicated random access resource;
triggering random access before the validity period of the target resource starts and/or after the validity period of the target resource ends;
in case there is a valid configuration of the target resource on a first beam selected for access, sending uplink data on the target resource within the validity period of the target resource, otherwise triggering random access; or,
in case that there is a valid configuration of dedicated random access resource on a second beam selected for access, triggering random access on the second beam.

13. The method according to claim 5, wherein the method further includes:
receiving configuration information of a third timer sent by the network device, wherein the third timer is a timer used to control cell handover or synchronization reconfiguration;
wherein after receiving validity period information of a target resource sent by a network device, the method further includes at least one of the following:
when receiving a signaling carrying the validity period information, starting the third timer;
ignoring the third timer;
starting the third timer when the validity period of the target resource ends;
starting the third timer when the validity period of the target resource starts.

14. A network device, **characterized by** comprising:
a resource reservation module (51) configured to reserve an uplink resource for user equipment as a target resource of a target cell of a random access channel less, RACH-less, handover procedure;
an information determining module (52) configured to determine validity period information of the target resource;
a validity period sending module (53) configured to send the validity period information to the user equipment;
wherein the validity period information includes synchronization signal and PBCH block, SSB, index associated with the target resource, a cycle of the target resource and at least one of a start time of a valid window, an end time of the valid window, a length of the valid window or configuration information of timing advance.

15. A user equipment, **characterized by** comprising:
a validity period receiving module (61) configured to receive validity period information of a target resource of a target cell of a random access channel less, RACH-less, handover procedure, sent by a network device, wherein the target resource is an uplink resource reserved for the user equipment;
wherein the validity period information includes synchronization signal and PBCH block, SSB, index associated with the target resource, a cycle of the target resource and at least one of a start time of a valid window, an end time of the valid window, a length of the valid window or configuration information of timing advance.

## Patentansprüche

1. Verfahren zur Konfiguration von Uplink-Ressourcen, das von einer Netzwerkvorrichtung durchgeführt wird, **dadurch gekennzeichnet, dass** es Folgendes umfasst:
Reservieren (31) einer Uplink-Ressource für ein Benutzergerät, UE, als Zielressource einer Zielzelle einer Übergabeprozedur ohne wahlfreien Zugriffskanal, RACH-los;
Bestimmen (32) von Informationen über die Gültigkeitsdauer der Zielressource; und
Senden (33) der Informationen über die Gültigkeitsdauer an das Benutzergerät;
wobei die Informationen über die Gültigkeitsdauer Synchronisationssignal und PBCH-Block, SSB, Index, der der Zielressource zugeordnet ist, einen Zyklus der Zielressource und mindestens eine der folgenden Informationen enthalten: eine Startzeit eines gültigen Fensters, eine Endzeit des gültigen Fensters, eine Länge des gültigen Fensters oder Konfigurationsinformationen des Zeitvorlaufs.

2. Verfahren nach Anspruch 1, wobei die Startzeit des gültigen Fensters eine der Folgenden ist: eine Systemrahmennummer, SFN, einer Zelle, auf die das Benutzergerät zugreifen soll; die Systemrahmennummer der Zelle, auf die das Benutzergerät zugreifen soll, und ein Offset; eine erste spezifizierte Schlitzposition oder Subrahmenposition der Zelle, auf die das Benutzergerät zugreifen soll, nachdem das Benutzergerät eine Signalisierung empfängt, die die Informationen über die Gültigkeitsdauer trägt; ein voreingestellter Zeitpunkt, zu dem ein erster Zeitgeber abläuft, wobei der erste Zeitgeber gestartet wird, wenn das Benutzergerät die Signalisierung empfängt, die die Informationen über die Gültigkeitsdauer trägt, oder wenn das Benutzergerät eine Downlink-Synchronisation der Zelle erhält, auf die zugegriffen werden soll; eine Systemrahmennummer einer vorbestimmten Referenzzelle; die Systemrahmennummer der vorbestimmten Referenzzelle und ein Offset; nachdem das Benutzergerät die Signalisierung empfängt, die die Informationen über die Gültigkeitsdauer trägt, eine erste spezifizierte Schlitzposition oder Subrahmenposition der vorbestimmten Referenzzelle;
wobei die Endzeit des gültigen Fensters eine der Folgenden ist: eine Systemrahmennummer einer Zelle, auf die das Benutzergerät zugreifen soll; die Systemrahmennummer der Zelle, auf die das Benutzergerät zugreifen soll, und ein Offset; ein voreingestellter Zeitpunkt, zu dem ein zweiter Zeitgeber abläuft, wobei der zweite Zeitgeber zu der Startzeit des gültigen Fensters gestartet wird, oder ein erstes gültiges Uplink-Ressourcenereignis in der Zielressource, oder ein Zeitpunkt, zu dem das Benutzergerät die Signalisierung empfängt, die die Informationen über die Gültigkeitsdauer trägt; wobei die Länge des gültigen Fensters die Dauer des zweiten Zeitgebers ist; eine Systemrahmennummer einer vorbestimmten Referenzzelle; wobei die Länge des gültigen Fensters die Dauer des zweiten Zeitgebers ist; eine Systemrahmennummer einer vorbestimmten Referenzzelle; die Systemrahmennummer der vorbestimmten Referenzzelle und ein Offset; ein Moment, wenn die Anzahl von Wiederholungen von gültigen Uplink-Ressourcenanlässen eine erste voreingestellte Anzahl von Malen erreicht, wobei die Länge des gültigen Fensters die erste voreingestellte Anzahl von Malen der Uplink-Ressourcenanlässe ist; ein Moment, wenn die Anzahl von Wiederholungen von gültigen Uplink-Ressourcenzyklen eine zweite voreingestellte Anzahl von Malen erreicht, wobei die Länge des gültigen Fensters die zweite voreingestellte Anzahl von Malen der gültigen Uplink-Ressourcenzyklen ist; ein Timeout-Moment eines dritten Zeitgebers zum Steuern von Zellenübergabe oder Rekonfiguration der Synchronisation;
wobei die Konfigurationsinformationen des Zeitvorlaufs eines der Folgenden aufweisen: Zeitvorlauf; eine Zeitvorlauf-Referenzzelle und eine Zeitdifferenz zu einem Zeitvorlauf der Referenzzelle.

3. Verfahren nach Anspruch 1, wobei die Zielressource eine physikalischer-Uplink-Steuerkanal-, PUCCH-, Ressource und/oder eine physikalischer-Uplink-Gemeinschaftskanal-, PUSCH-, Ressource aufweist.

4. Verfahren nach Anspruch 1, wobei das Senden der Informationen über die Gültigkeitsdauer an das Benutzergerät umfasst:
in einer Zellenübergabeprozedur oder in einer Prozedur zur Rekonfiguration der Zellsynchronisation oder in einer Prozedur zur Rekonfiguration der Synchronisation einer sekundären Zellengruppe oder in einer sekundären Zellenänderungsprozedur oder in einer Prozedur, in der Downlink-Daten ankommen und Uplink nicht synchronisiert ist, das Senden der Informationen über die Gültigkeitsdauer an das Benutzergerät.

5. Verfahren zur Konfiguration von Uplink-Ressourcen, das von einem Benutzergerät, UE, durchgeführt wird, **dadurch gekennzeichnet, dass** es umfasst:
Empfang (41) von Informationen über die Gültigkeitsdauer einer Zielressource einer Zielzelle einer Übergabeprozedur ohne wahlfreien Zugriffskanal, RACH-los, die von einer Netzwerkvorrichtung gesendet werden;
wobei die Zielressource eine für das Benutzergerät reservierte Uplink-Ressource ist;
wobei die Informationen über die Gültigkeitsdauer Synchronisationssignal und PBCH-Block, SSB, Index, der der Zielressource zugeordnet ist, einen Zyklus der Zielressource und mindestens eine der folgenden Informationen enthalten: eine Startzeit eines gültigen Fensters, eine Endzeit des gültigen Fensters, eine Länge des gültigen Fensters oder Konfigurationsinformationen über den Zeitvorlauf.

6. Verfahren nach Anspruch 5, wobei die Startzeit des gültigen Fensters eine der Folgenden ist: eine Systemrahmennummer, SFN, einer Zelle, auf die das Benutzergerät zugreifen soll; die Systemrahmennummer der Zelle, auf die das Benutzergerät zugreifen soll, und ein Offset; eine erste spezifizierte Schlitzposition oder Subrahmenposition der Zelle, auf die das Benutzergerät zugreifen soll, nachdem das Benutzergerät eine Signalisierung empfängt, die die Informationen über die Gültigkeitsdauer trägt; ein voreingestellter Zeitpunkt, zu dem ein erster Zeitgeber abläuft, wobei der erste Zeitgeber gestartet wird, wenn das Benutzergerät die Signalisierung empfängt, die die Informationen über die Gültigkeitsdauer trägt, oder wenn das Benutzergerät eine Downlink-Synchronisation der Zelle erhält, auf die zugegriffen werden soll;
eine Systemrahmennummer einer vorbestimmten Referenzzelle; die Systemrahmennummer der vorbestimmten Referenzzelle und ein Offset; nachdem die Benutzerausrüstung die Signalisierung empfängt, die die Informationen über die Gültigkeitsdauer trägt, eine erste spezifizierte Schlitzposition oder Subrahmenposition der vorbestimmten Referenzzelle;
wobei die Endzeit des gültigen Fensters eine der folgenden ist: eine Systemrahmennummer einer Zelle, auf die das Benutzergerät zugreifen soll; die Systemrahmennummer der Zelle, auf die das Benutzergerät zugreifen soll, und ein Offset; ein voreingestellter Zeitpunkt, zu dem ein zweiter Zeitgeber abläuft, wobei der zweite Zeitgeber zu der Startzeit des gültigen Fensters gestartet wird, oder ein erstes gültiges Uplink-Ressourcenereignis in der Zielressource, oder ein Zeitpunkt, zu dem das Benutzergerät die Signalisierung empfängt, die die Informationen über die Gültigkeitsdauer trägt; wobei die Länge des gültigen Fensters die Dauer des zweiten Zeitgebers ist; eine Systemrahmennummer einer vorbestimmten Referenzzelle; wobei die Länge des gültigen Fensters die Dauer des zweiten Zeitgebers ist; eine Systemrahmennummer einer vorbestimmten Referenzzelle; die Systemrahmennummer der vorbestimmten Referenzzelle und ein Offset; ein Moment, wenn die Anzahl von Wiederholungen von gültigen Uplink-Ressourcenanlässen eine erste voreingestellte Anzahl von Malen erreicht, wobei die Länge des gültigen Fensters die erste voreingestellte Anzahl von Malen der Uplink-Ressourcenanlässe ist; ein Moment, wenn die Anzahl von Wiederholungen von gültigen Uplink-Ressourcenzyklen eine zweite voreingestellte Anzahl von Malen erreicht, wobei die Länge des gültigen Fensters die zweite voreingestellte Anzahl von Malen der gültigen Uplink-Ressourcenzyklen ist; ein Timeout-Moment eines dritten Zeitgebers zum Steuern von Zellenübergabe oder Rekonfiguration der Synchronisation.

7. Verfahren nach Anspruch 5, wobei die Zielressource eine physikalischer-Uplink-Steuerkanal-, PUCCH-, Ressource und/oder eine physikalischer-Uplink-Gemeinschaftskanal-, PUSCH-, Ressource aufweist.

8. Verfahren nach Anspruch 5, wobei das Empfangen von Informationen über die Gültigkeitsdauer einer von einer Netzwerkvorrichtung gesendeten Zielressource Folgendes umfasst: in einer Zellenübergabeprozedur oder in einer Prozedur zur Rekonfiguration der Zellsynchronisation oder in einer Prozedur zur Rekonfiguration der Synchronisation einer sekundären Zellengruppe oder in einer Prozedur zur Hinzufügung einer sekundären Zelle oder in einer Prozedur zur Modifikation einer sekundären Zelle oder in einer Prozedur, in der Downlink-Daten ankommen und Uplink nicht synchronisiert ist, das Empfangen der Informationen über die Gültigkeitsdauer der von der Netzwerkvorrichtung gesendeten Zielressource.

9. Verfahren nach Anspruch 5, wobei die Konfigurationsinformationen des Zeitvorlaufs eines der Folgenden aufweisen: Zeitvorlauf, eine Zeitvorlauf-Referenzzelle und eine Zeitdifferenz zu einem Zeitvorlauf der Referenzzelle.

10. Verfahren nach Anspruch 5, wobei das Verfahren ferner mindestens einen der folgenden Schritte umfasst: Anpassen der Uplink-Sendezeit gemäß den Konfigurationsinformationen des Zeitvorlaufs oder Senden von Uplink-Daten innerhalb des gültigen Fensters der Zielressource.

11. Verfahren nach Anspruch 5, wobei das Verfahren nach dem Empfang von Informationen über die Gültigkeitsdauer einer Zielressource, die von einer Netzwerkvorrichtung gesendet wurden, ferner mindestens eines der folgenden Schritte umfasst:
Freigeben der Zielressource beim Empfang der physikalischen Downlink-Steuerkanalplanung, wobei die physikalische Downlink-Steuerkanalplanung mit einer temporären Zellfunknetzkennung des Benutzergeräts verschlüsselt ist;
Freigabe der Zielressource, wenn ein dritter Zeitgeber für die Steuerung der Zellenübergabe oder der Rekonfiguration der Synchronisation abläuft;
Freigabe der Zielressource bei Empfang einer Rückmeldung, dass die Uplink-Daten erfolgreich empfangen wurden;
Freigabe der Zielressource, wenn ein wahlfreier Zugriff abgeschlossen ist;
Auslösen des wahlfreien Zugriffs vor Beginn der Gültigkeitsdauer der Zielressource und/oder nach Ende der Gültigkeitsdauer; oder,
falls es eine gültige Konfiguration der Zielressource auf einem dritten für den Zugriff ausgewählten Strahl gibt, Senden von Uplink-Daten auf der Zielressource innerhalb der Gültigkeitsdauer der Zielressource, andernfalls Auslösen des zufälligen Zugriffs.

12. Verfahren nach Anspruch 5, wobei das Verfahren ferner Folgendes umfasst: Empfangen von dedizierten Ressourcen mit wahlfreiem Zugriff, die von der Netzwerkvorrichtung konfiguriert werden;
wobei das Verfahren nach dem Empfang von Informationen über die Gültigkeitsdauer einer Zielressource, die von einer Netzwerkvorrichtung gesendet wurden, ferner mindestens eines der Folgenden umfasst:
innerhalb einer Gültigkeitsdauer der Zielressource, Senden von Uplink-Daten auf der Zielressource und das Nichtauslösen des wahlfreien Zugriffs vor Ablauf der Gültigkeitsdauer der Zielressource;
Ignorieren der Zielressource und Auslösen des wahlfreien Zugriffs;
Empfangen von Anzeigeinformationen, die von der Netzwerkvorrichtung gesendet werden, und Auslösen von wahlfreiem Zugriff oder Senden von Uplink-Daten auf der Zielressource gemäß den Anzeigeinformationen, wobei die Anzeigeinformationen verwendet werden, um Prioritäten der Zielressource und der dedizierten wahlfreien Zugriffsressource anzuzeigen;
Auslösen des wahlfreien Zugriffs vor Beginn der Gültigkeitsdauer der Zielressource und/oder nach Ende der Gültigkeitsdauer der Zielressource;
falls es eine gültige Konfiguration der Zielressource auf einem ersten für den Zugriff ausgewählten Strahl gibt, Senden von Uplink-Daten auf der Zielressource innerhalb der Gültigkeitsdauer der Zielressource, andernfalls Auslösen des zufälligen Zugriffs; oder,
falls es eine gültige Konfiguration einer dedizierten Ressource mit wahlfreiem Zugriff auf einem zweiten, für den Zugriff ausgewählten Strahl gibt, Auslösung des wahlfreien Zugriffs auf dem zweiten Strahl.

13. Verfahren nach Anspruch 5, wobei das Verfahren ferner umfasst:
Empfangen von Konfigurationsinformationen eines dritten Zeitgebers, der von der Netzwerkvorrichtung gesendet wird, wobei der dritte Zeitgeber ein Zeitgeber ist, der zur Steuerung der Zellenübergabe oder der Rekonfiguration der Synchronisation verwendet wird;
wobei das Verfahren nach dem Empfang von Informationen über die Gültigkeitsdauer einer Zielressource, die von einer Netzwerkvorrichtung gesendet wurden, ferner mindestens eines der Folgenden umfasst:
beim Empfang eines Signals, das die Information über die Gültigkeitsdauer enthält, wird der dritte Zeitgeber gestartet;
Ignorieren des dritten Zeitgebers;
Starten des dritten Zeitgebers, wenn die Gültigkeitsdauer der Zielressource endet;
Starten des dritten Zeitgebers, wenn die Gültigkeitsdauer der Zielressource beginnt.

14. Eine Netzwerkvorrichtung, **dadurch gekennzeichnet, dass** sie aufweist:
ein Ressourcenreservierungsmodul (51), das eingerichtet ist, eine Uplink-Ressource für ein Benutzergerät als eine Zielressource einer Zielzelle einer Übergabeprozedur ohne wahlfreien Zugriffskanal, RACH-los, zu reservieren;
ein Informationsbestimmungsmodul (52), das eingerichtet ist, Informationen über die Gültigkeitsdauer der Zielressource zu bestimmen;
ein Modul (53) zum Senden der Gültigkeitsdauer, das eingerichtet ist, die Informationen über die Gültigkeitsdauer an das Benutzergerät zu senden;
wobei die Informationen über die Gültigkeitsdauer Synchronisationssignal und PBCH-Block, SSB, Index, der der Zielressource zugeordnet ist, einen Zyklus der Zielressource und mindestens eine der folgenden Informationen enthalten: eine Startzeit eines gültigen Fensters, eine Endzeit des gültigen Fensters, eine Länge des gültigen Fensters oder Konfigurationsinformationen über den Zeitvorlauf.

15. Ein Benutzergerät, **dadurch gekennzeichnet, dass** es aufweist:
ein Gültigkeitsdauer-Empfangsmodul (61), das eingerichtet ist, Informationen über die Gültigkeitsdauer einer Zielressource einer Zielzelle einer Übergabeprozedur ohne wahlfreien Zugriffskanal, RACH-los, zu empfangen, die von einer Netzwerkvorrichtung gesendet werden, wobei die Zielressource eine für das Benutzergerät reservierte Uplink-Ressource ist;
wobei die Informationen über die Gültigkeitsdauer Synchronisationssignal und PBCH-Block, SSB, Index, der der Zielressource zugeordnet ist, einen Zyklus der Zielressource und mindestens eine der folgenden Informationen enthalten: eine Startzeit eines gültigen Fensters, eine Endzeit des gültigen Fensters, eine Länge des gültigen Fensters oder Konfigurationsinformationen über den Zeitvorlauf.

## Revendications

1. Procédé de configuration de ressource de liaison montante, mis en œuvre par un dispositif de réseau, **caractérisé en ce qu'**il comprend de :
réserver (31) une ressource de liaison montante pour un équipement d'utilisateur, UE, comme une ressource cible d'une cellule cible d'une procédure de transfert sans canal d'accès aléatoire, sans RACH ;
déterminer (32) une information de période de validité de la ressource cible ; et
envoyer (33) l'information de période de validité à l'équipement d'utilisateur ;
dans lequel l'information de période de validité inclut un signal de synchronisation et un indice SSB de bloc de PBCH associé à la ressource cible, un cycle de la ressource cible et au moins un parmi un instant de début d'une fenêtre valide, un instant de fin de la fenêtre valide, une longueur de la fenêtre valide ou des informations de configuration d'une avance temporelle.

2. Procédé selon la revendication 1, dans lequel l'instant de début de la fenêtre valide est un parmi : un nombre de trames de système, SFN, d'une cellule à laquelle l'équipement d'utilisateur doit accéder ; le nombre de trames de système de la cellule à laquelle l'équipement d'utilisateur doit accéder et un décalage ; après que l'équipement d'utilisateur a reçu une signalisation transportant l'information de période de validité, une première position de créneau spécifiée ou une position de sous-trame de la cellule à laquelle l'équipement d'utilisateur doit accéder ; un moment prédéfini où une première temporisation expire, dans lequel la première temporisation est démarrée lorsque l'équipement d'utilisateur reçoit la signalisation transportant l'information de période de validité ou lorsque l'équipement d'utilisateur obtient une synchronisation dans le sens descendant de la cellule devant faire l'objet d'un accès ; un nombre de trames de système d'une cellule de référence prédéterminée ; le nombre de trames de système de la cellule de référence prédéterminée et un décalage ; après que l'équipement d'utilisateur a reçu la signalisation transportant l'information de période de validité, une première position de créneau spécifiée ou une position de sous-trame de la cellule de référence prédéterminée ;
dans lequel l'instant de fin de la fenêtre valide est un parmi : un nombre de trames de système d'une cellule à laquelle l'équipement d'utilisateur doit accéder ; le nombre de trames de système de la cellule à laquelle l'équipement d'utilisateur doit accéder et un décalage ; un moment prédéfini où une deuxième temporisation expire, dans lequel la deuxième temporisation est démarrée à l'instant de début de la fenêtre valide, ou une première occasion de ressource de liaison montante valide dans la ressource cible, ou un moment où l'équipement d'utilisateur reçoit la signalisation transportant l'information de période de validité ; dans lequel la longueur de la fenêtre valide est une durée de la deuxième temporisation ; un nombre de trames de système d'une cellule de référence prédéterminée ; le nombre de trames de système de la cellule de référence prédéterminée et un décalage ; un moment où le nombre de répétitions d'occasions de ressource de liaison montante valide atteint un premier nombre de fois prédéfini, dans lequel la longueur de la fenêtre valide est le premier nombre de fois prédéfini des occasions de ressource de liaison montante ; un moment où le nombre de répétitions de cycles de ressource de liaison montante valide atteint un second nombre de fois prédéfini, dans lequel la longueur de la fenêtre valide est le second nombre de fois prédéfini des cycles de ressource de liaison montante valide ; un moment d'arrêt d'une troisième temporisation pour commander un transfert de cellules ou une reconfiguration de synchronisation ;
dans lequel les informations de configuration de l'avance temporelle incluent un parmi : une avance temporelle ; une cellule de référence d'avance temporelle et une différence de temps avec une avance temporelle de la cellule de référence.

3. Procédé selon la revendication 1, dans lequel la ressource cible inclut une ressource de canal physique de contrôle de liaison montante, PUCCH, et/ou une ressource de canal physique partagé de liaison montante, PUSCH.

4. Procédé selon la revendication 1, dans lequel l'envoi de l'information de période de validité à l'équipement d'utilisateur inclut de :
dans une procédure de transfert de cellule, ou dans une procédure de reconfiguration de synchronisation de cellule, ou dans une procédure de reconfiguration de synchronisation de groupe de cellules secondaires, ou dans une procédure d'ajout de cellules secondaires, ou dans une procédure de modification de cellules secondaires, ou dans une procédure dans laquelle des données de liaison descendante arrivent et une liaison montante est désynchronisée, envoyer l'information de période de validité à l'équipement d'utilisateur.

5. Procédé de configuration de ressource de liaison montante, mis en œuvre par un équipement d'utilisateur, UE, **caractérisé en ce qu'**il comprend de :
recevoir (41) une information de période de validité d'une ressource cible d'une cellule cible d'une procédure de transfert sans canal d'accès aléatoire, sans RACH, envoyée par un dispositif de réseau ;
dans lequel la ressource cible est une ressource de liaison montante réservée à l'équipement d'utilisateur ;
dans lequel l'information de période de validité inclut un signal de synchronisation et un indice SSB de bloc de PBCH associé à la ressource cible, un cycle de la ressource cible et au moins un parmi un instant de début d'une fenêtre valide, un instant de fin de la fenêtre valide, une longueur de la fenêtre valide ou des informations de configuration d'avance temporelle.

6. Procédé selon la revendication 5, dans lequel l'instant de début de la fenêtre valide est un parmi : un nombre de trames de système, SFN, d'une cellule à laquelle l'équipement d'utilisateur doit accéder ; le nombre de trames de système de la cellule à laquelle l'équipement d'utilisateur doit accéder et un décalage ; après que l'équipement d'utilisateur a reçu une signalisation transportant l'information de période de validité, une première position de créneau spécifiée ou une position de sous-trame de la cellule à laquelle l'équipement d'utilisateur doit accéder ; un moment prédéfini où une première temporisation expire, dans lequel la première temporisation est démarrée lorsque l'équipement d'utilisateur reçoit la signalisation transportant l'information de période de validité ou lorsque l'équipement d'utilisateur obtient une synchronisation dans le sens descendant de la cellule devant faire l'objet d'un accès ;
un nombre de trames de système d'une cellule de référence prédéterminée ; le nombre de trames de système de la cellule de référence prédéterminée et un décalage ; après que l'équipement d'utilisateur a reçu la signalisation transportant l'information de période de validité, une première position de créneau spécifiée ou une position de sous-trame de la cellule de référence prédéterminée ;
dans lequel l'instant de fin de la fenêtre valide est un parmi : un nombre de trames de système d'une cellule à laquelle l'équipement d'utilisateur doit accéder ; le nombre de trames de système de la cellule à laquelle l'équipement d'utilisateur doit accéder et un décalage ; un moment prédéfini où une deuxième temporisation expire, dans lequel la deuxième temporisation est démarrée à l'instant de début de la fenêtre valide, ou une première occasion de ressource de liaison montante valide dans la ressource cible, ou un moment où l'équipement d'utilisateur reçoit la signalisation transportant l'information de période de validité ; dans lequel la longueur de la fenêtre valide est une durée de la deuxième temporisation ; un nombre de trames de système d'une cellule de référence prédéterminée ; le nombre de trames de système de la cellule de référence prédéterminée et un décalage ; un moment où le nombre de répétitions d'occasions de ressource de liaison montante valide atteint un premier nombre de fois prédéfini, dans lequel la longueur de la fenêtre valide est le premier nombre de fois prédéfini des occasions de ressource de liaison montante ; un moment où le nombre de répétitions de cycles de ressource de liaison montante valide atteint un second nombre de fois prédéfini, dans lequel la longueur de la fenêtre valide est le second nombre de fois prédéfini des cycles de ressource de liaison montante valide ; un moment d'arrêt d'une troisième temporisation pour commander un transfert de cellules ou une reconfiguration de synchronisation.

7. Procédé selon la revendication 5, dans lequel la ressource cible inclut une ressource de canal physique de contrôle de liaison montante, PUCCH, et/ou une ressource de canal physique partagé de liaison montante, PUSCH.

8. Procédé selon la revendication 5, dans lequel la réception de l'information de période de validité d'une ressource cible envoyée par un dispositif de réseau inclut : dans une procédure de transfert de cellule, ou dans une procédure de reconfiguration de synchronisation de cellule, ou dans une procédure de reconfiguration de synchronisation de groupe de cellules secondaires, ou dans une procédure d'ajout de cellules secondaires, ou dans une procédure de modification de cellules secondaires, ou dans une procédure dans laquelle des données de liaison descendante arrivent et une liaison montante est désynchronisée, recevoir l'information de période de validité de la ressource cible par le dispositif de réseau.

9. Procédé selon la revendication 5, dans lequel les informations de configuration de l'avance de synchronisation incluent un parmi : une avance temporelle ; une cellule de référence d'avance temporelle et une différence de temps avec une avance temporelle de la cellule de référence.

10. Procédé selon la revendication 5, dans lequel le procédé inclut en outre au moins un parmi : régler un temps de transmission de liaison montante en fonction des informations de configuration de l'avance de synchronisation, ou envoyer des données de liaison montante dans la fenêtre valide de la ressource cible.

11. Procédé selon la revendication 5, dans lequel, après réception de l'information de période de validité d'une ressource cible envoyée par un dispositif de réseau, le procédé inclut en outre au moins l'une des étapes suivantes :
libérer la ressource cible à réception d'un ordonnancement de canal physique de contrôle de liaison descendante, dans lequel l'ordonnancement de canal physique de contrôle de liaison descendante est brouillé avec un identifiant temporaire de réseau radio cellulaire de l'équipement d'utilisateur ;
libérer la ressource cible lorsqu'une troisième temporisation destinée à commander un transfert de cellules ou une reconfiguration de synchronisation, expire ;
libérer la ressource cible à réception d'un message de retour indiquant que des données de liaison montante ont été reçues avec succès ;
libérer la ressource cible lorsqu'un accès aléatoire est terminé ;
déclencher un accès aléatoire avant le début de la période de validité de la ressource cible et/ou après la fin de la période de validité ; ou
dans un cas où il existe une configuration valide de la ressource cible sur un troisième faisceau sélectionné en vue d'un accès, envoyer des données de liaison montante sur la ressource cible sur la période de validité de la ressource cible, sinon déclencher un accès aléatoire.

12. Procédé selon la revendication 5, dans lequel le procédé inclut en outre de : recevoir des ressources d'accès aléatoire dédiées configurées par le dispositif de réseau ; dans lequel, après réception d'une information de période de validité d'une ressource cible envoyée par un dispositif de réseau, le procédé inclut en outre au moins une des étapes suivantes :
sur une période de validité de la ressource cible, envoyer des données de liaison montante sur la ressource cible et ne pas déclencher d'accès aléatoire avant la fin de la période de validité de la ressource cible ;
ignorer la ressource cible et déclencher un accès aléatoire ;
recevoir des informations d'indication envoyées par le dispositif de réseau, et déclencher un accès aléatoire ou envoyer des données de liaison montante sur la ressource cible en fonction des informations d'indication, dans lequel les informations d'indication sont utilisées pour indiquer des priorités de la ressource cible et de la ressource d'accès aléatoire dédiée ;
déclencher un accès aléatoire avant le début de la période de validité de la ressource cible et/ou après la fin de la période de validité de la ressource cible ;
dans un cas où il existe une configuration valide de la ressource cible sur un premier faisceau sélectionné en vue d'un accès, envoyer des données de liaison montante sur la ressource cible sur la période de validité de la ressource cible, sinon déclencher un accès aléatoire ; ou
dans un cas où il existe une configuration valide de ressource d'accès aléatoire dédiée sur un deuxième faisceau sélectionné en vue d'un accès, déclencher un accès aléatoire sur le deuxième faisceau.

13. Procédé selon la revendication 5, dans lequel le procédé inclut en outre de :
recevoir des informations de configuration d'une troisième temporisation envoyée par le dispositif de réseau,
dans lequel la troisième temporisation est une temporisation utilisée pour commander un transfert de cellules ou une reconfiguration de synchronisation ;
dans lequel, après réception d'une information de période de validité d'une ressource cible envoyée par un dispositif de réseau, le procédé inclut en outre au moins une des étapes suivantes :
à réception d'une signalisation transportant l'information de période de validité, démarrer la troisième temporisation ;
ignorer la troisième temporisation ;
démarrer la troisième temporisation à la fin de la période de validité de la ressource cible ;
démarrer la troisième temporisation au début de la période de validité de la ressource cible.

14. Dispositif de réseau, **caractérisé en ce qu'**il comprend :
un module de réservation de ressource (51) configuré pour réserver une ressource de liaison montante pour un équipement d'utilisateur comme une ressource cible d'une cellule cible d'une procédure de transfert sans canal d'accès aléatoire, sans RACH ;
un module de détermination d'information (52) configuré pour déterminer une information de période de validité de la ressource cible ;
un module d'envoi de période de validité (53) configuré pour envoyer l'information de période de validité à l'équipement d'utilisateur ;
dans lequel l'information de période de validité inclut un signal de synchronisation et un indice SSB de bloc de PBCH associé à la ressource cible, un cycle de la ressource cible et au moins un parmi un instant de début d'une fenêtre valide, un instant de fin de la fenêtre valide, une longueur de la fenêtre valide ou des informations de configuration d'avance temporelle.

15. Équipement d'utilisateur, **caractérisé en ce qu'**il comprend :
un module de réception de période de validité (61) configuré pour recevoir une informations de période de validité d'une ressource cible d'une cellule cible d'une procédure de transfert sans canal d'accès aléatoire, sans RACH, envoyée par un dispositif de réseau, dans lequel la ressource cible est une ressource de liaison montante réservée à l'équipement d'utilisateur ;
dans lequel l'information de période de validité inclut un signal de synchronisation et un indice SSB de bloc de PBCH associé à la ressource cible, un cycle de la ressource cible et au moins un parmi un instant de début d'une fenêtre valide, un instant de fin de la fenêtre valide, une longueur de la fenêtre valide ou des informations de configuration d'avance temporelle.
